# EUROPÄISCHE PATENTSCHRIFT

(11) **EP 2 941 446 B1**
(45) Veröffentlichungstag und Bekanntmachung des Hinweises auf die Patenterteilung: **10.10.2018**
(21) Anmeldenummer: 13814105.6
(22) Anmeldetag: 18.12.2013
(51) Int. Cl.: C08G 18/62, C08G 18/79, C08G 18/20, C09D 175/04

(54) **KATALYSATOREN FÜR POLYURETHANBESCHICHTUNGSMASSEN**
CATALYSTS FOR POLYURETHANE COATING COMPOUNDS
CATALYSEURS POUR MATIÈRES DE REVÊTEMENT À BASE DE POLYURÉTHANE

(30) Priorität: 07.01.2013 EP 13150393
(43) Veröffentlichungstag der Anmeldung: 11.11.2015
(73) Patentinhaber: BASF SE, 67056 Ludwigshafen am Rhein (DE)
(72) Erfinder: SCHÄFER, Harald, 68219 Mannheim (DE); EICHFELDER, Andreas, 67133 Maxdorf (DE); GASPAR, Boris, CH-8046 Zürich (CH); PAUEN, Thorsten, 67071 Ludwigshafen (DE)
(74) Vertreter: BASF IP Association
(86) Internationale Anmeldenummer: PCT/EP2013/077123
(87) Internationale Veröffentlichungsnummer: WO 2014/106578

(56) Entgegenhaltungen:
- WO-A1-2011/061314
- WO-A1-2013/144056
- WO-A2-2012/088148
- WO-A2-2012/088163
- US-A1- 2012 156 474

## Beschreibung

Die vorliegende Erfindung betrifft neue Katalysatoren zur Härtung von lösungsmittelbasierten oder lösemittelfreien Beschichtungsmassen, wie z.B. 2-Komponenten Polyurethanlacken oder 2-Komponenten Polyurethanklebstoffen.

Um die Aushärtung von Beschichtungsmassen für Polyurethanlacke zu beschleunigen, können diesen eine Vielzahl von Metall-, insbesondere Schwermetallverbindungen als Katalysatoren für die Reaktion von Isocyanat- und Polyol-Gruppen zugegeben werden. Dies wird insbesondere notwendig bei Verwendung niedrig viskoser / niedermolekularer Bestandteile, damit ein praxistauglicher Härtungsfortschritt erreicht wird. Für diese wird aus Gründen der Toxikologie und/oder der Arbeits- und Gesundheitshygiene ein Ersatz gesucht. Toxikologisch kritisch sind insbesondere zinnorganische Verbindungen, besonders Dialkylzinn-Verbindungen, insbesondere Dibutyldizinndilaurat (DBTL).

WO 2011/061314 beschreibt Verfahren zur Beschichtung von Substraten mit Beschichtungsmassen, umfassend
- in einem ersten Schritt Aufbringen auf das Substrat in der gewünschten Stärke mindestens einer Beschichtungsmasse, enthaltend
- (A) mindestens ein Polyisocyanat, erhältlich durch Umsetzung mindestens eines monomeren Isocyanats,
- (B) mindestens eine Verbindung, die mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
- (C) mindestens ein Imidazoliumsalz,
- (D) optional mindestens ein Lösungsmittel,
- (E) optional mindestens einen anderen Urethanisierungskatalysator als (C), sowie,
- (F) optional andere anwendungstypische Komponenten und/oder Additive, wobei das Imidazoliumsalz (C) die Formel 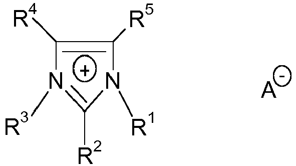
   hat, worin R¹ und R³ unabhängig voneinander für einen organischen Rest mit 1 bis 20 C-Atomen stehen,
   R², R⁴ und R⁵ unabhängig voneinander für ein H-Atom oder einen organischen Rest mit bis zu 20 C-Atomen stehen und A- für ein Anion steht,
- optional Trocknen der auf das Substrat aufgebrachten Beschichtungsmasse durch zumindest teilweises Entfernen flüchtiger Bestandteile, gefolgt von
- Härten der auf das Substrat aufgebrachten Beschichtungsmasse.

Mögliche Anionen A- werden von Seite 20, Zeile 28 bis Seite 25, Zeile 25 benannt. Bevorzugt kann es sich entsprechend Seite 24, Zeilen 23-28 um Carboxylatanionen handeln, bei denen es sich um Anionen von aliphatischen oder aromatischen Carbonsäuren, bevorzugt aliphatischen Carbonsäuren handelt. Als Beispiele von aromatischen Carbonsäuren sind Benzoat, Salicylat und Nicotinat erwähnt, jedoch nicht durch explizite Beispiele gestützt. Anspruch 8 benennt explizit und ausschließlich Beispiele für aliphatische Carboxylat-Anionen. Auf Seite 20, Zeile 32 wird mit Bezug wird auf WO 2007/090755, Seite 20, Zeile 36 bis Seite 24, Zeile 37 auf weitere Anionen verwiesen. Auch dort werden aromatische Carboxylate nicht erwähnt.
Vorteilig an den Imidazolium-Salzen mit aliphatischen Carboxylaten ist, dass sie metallorganische Katalysatoren ersetzen können und gegenüber den metallorganischen Katalysatoren ein verbessertes Verhältnis von Härtung zur Verarbeitungszeit haben.

Nachteilig an den Imidazolium-Salzen mit aliphatischen Carboxylaten ist, dass, wie in den Tabellen 3 und 4 der Seite 40 der WO 2007/090755 gezeigt, bei der Härtung eines Polyisocyanats mit dem handelsüblichen Polyacrylatpolyol Joncryl® 507 der BASF SE, Ludwigshafen, die Pendelhärten bei Härtung bei 30 min 60 °C + 24 h Raumtemperatur gegenüber 30 min 40 °C + 24 h Raumtemperatur in sieben von 10 Beispielen schlechter sind. Normalerweise werden bei einer höheren Temperatur nach der gleichen Härtungszeit auch höhere Pendelhärten erhalten. Anwender müssen sich dabei auf dieses erwartete Härtungs- und Trocknungsverhalten verlassen können.

Vorteilhaft wäre auch eine schnellere Härteentwicklung gegenüber den in der WO 2007/090755 genannten Beispielen.

WO 2008/076302 beschreibt strahlenhärtbare Beschichtungsmassen, enthaltend Polyurethanacrylatoligomere, erhalten durch Umsetzung von Isocyanaten mit Alkoholen. Als Katalysatoren erwähnt sind innerhalb langer Listen auch Imidazoliumsalze wie 1-Butyl-3-methylimidazolium-acetat. Explizites wird in den Beispielen Dibutylzinndilaurat eingesetzt. Die gezielte Substitution toxischer Lewis-Säuren wie Dibutylzinndilaurat und das Erzielen eines bevorzugten Härtungsverhaltens von Isocyanaten mit Polyolen werden nicht beschrieben. Zudem wird lediglich die Herstellung von Polyurethan-Präpolymeren beschrieben, nicht jedoch die Härtung von Polyurethanlacken. Einen ähnlichen Offenbarungsgehalt hat die WO 2008/133668, in der ebenfalls Polyurethan-Präpolymere aus Polyisocyanaten und Polyalkylenglykolen mit einem Mn von 300 bis 5000 beschrieben werden.

WO 2007/090755 und WO 2009/010502 beschreiben Polyurethane, die mit Ionischen Flüssigkeiten wie z.B. Ethylmethylimidazolium-ethylsulfat antistatisch ausgestaltet werden. Ethylmethylimidazolium-ethylsulfat als Ionische Flüssigkeit fungiert hier ausschließlich als Antistatikum, um die Leitfähigkeit des Polymeren zu erhöhen. Davon funktionell und inhaltlich gesondert werden übliche Katalysatoren zur Umsetzung von Polyisocyanat und Polyol zu Polyurethanen aufgeführt. Ethylmethylimidazolium ethylsulfat ist zwar bei der Bildung des Polyurethans anwesend, es gibt jedoch keinen Hinweis auf eine eventuelle katalytische Wirkung bei der Herstellung von Polyurethanen, und insbesondere keinen Bezug auf Lacke oder Lackeigenschaften.

WO 2003/093246 beschreibt ionische Flüssigkeiten aus Ammonium- oder Phosphonium-Kationen und einem Anion eines fünfgliedrigen Stickstoffheteroaromaten als Lösungsmittel und Katalysator für die Oligomerisierung von Isocyanaten. Dabei werden monomere Isocyanate mit sich selber in einer Cyclisierungsreaktion zu ihren Oligomeren, Dimeren (Uretdion) und Trimeren (Isocyanurat, Iminooxadiazindion) umgesetzt.
Stickstoffheteroaromatkationen als Komponente ionischer Flüssigkeiten werden nicht beschrieben. Ähnlich beschreibt EP 1389221 den Einsatz von Triazolatstrukturen für die Umsetzung von Isocyanatgruppen mit anderen Isocyanatgruppen.

WO 2006/084880 beschreibt die zumindest teilweise Oligomerisierung von Diisocyanaten zur Herstellung von Isocyanurat-, Biuret- oder Allophanat-Gruppen enthaltenden Polyisocyanaten, in Gegenwart mindestens eines Oligomerisierungskatalysators, bei dem es sich um eine ionische Flüssigkeit handelt, unter anderem auch Imidazolium-Kationen. Eine Eignung als Urethanisierungskatalysatoren, respektive Vorteile beim Härtungsprozess von Polyisocyanaten und Polyolen in einer Lackanwendung, oder Lackanwendungen als solche werden nicht beschrieben.

WO 2007/062953 beansprucht wässrige Harzdispersionen erhältlich durch Umsetzung von hydroxygruppenhaltigen Keton-, Keton/Aldehyd-, Harnstoff/Aldehyd-Harzen oder deren hydrierten Folgeprodukten und mindestens einem Di- oder Polyisocyanat und mindestens einer Ionischen Flüssigkeit, die eine gegenüber Isocyanatgruppen reaktionsfähige Funktion aufweist und zusätzliche funktionelle Gruppen besitzt, und anschließender Vermengung des Harzes mit Wasser.
Die einbaubaren Ionischen Flüssigkeiten werden als Emulgatoren eingesetzt und dienen der Funktionalisierung sowie zur Überführung von organischen Harzen in stabile wässrige Lösungen, Verdünnungen und Dispersionen.
Funktional davon getrennt und unterschieden werden übliche Katalysatoren zur Umsetzung der obigen Komponenten offenbart.
Es gibt keinen Hinweis auf eine mögliche katalytische Wirkung der Ionischen Flüssigkeiten, auf einen Ersatz von toxischen Katalysatoren wie DBTL, oder auf einen möglichen Einsatz in lösungsmittelhaltigen 2-Komponenten Polyurethanlacken mit gutem Härtungsverhalten und guten Lackeigenschaften.

WO 2008/006422 beschreibt den Einsatz Ionischer Flüssigkeiten und auch von Metallsalzen in ionischen Flüssigkeiten als Antistatika in Kunststoffen.
Zur Herstellung von Polyurethanen unter Reaktion von Polyol und Polyisocyanat in Anwesenheit Ionischer Flüssigkeiten wird der übliche Urethanisierungskatalysator Triethylendiamin beschrieben.

Es gibt keinen Hinweis auf eine mögliche katalytische Wirkung der ionischen Flüssigkeiten auf die Urethanisierungsreaktion, oder auf Vorteile bei der Herstellung oder Anwendung in Lacken.

WO 2009/016322 beschreibt einen Prozess zur Herstellung von Urethanen aus Isocyanaten und Hydroxy-Verbindungen in Anwesenheit eines Carbens als Katalysator zur Substitution toxischer metallorganischer Katalysatoren.
Bei der katalytisch aktiven Spezies handelt es sich explizit um Carbene am C2-Kohlenstoff des Imidazolium-Rings, die isoliert oder in situ eingesetzt werden können.
Der Einsatz von Imidazoliumsalzen als Katalysator für die Urethanisierungsreaktion, eine Umsetzung von Polyisocyanaten und Polyolen zu Lacken, und optional Vorteile bei der Aushärtung zu Lacken sind nicht beschrieben

Buchmeiser et al, Eur. J. Inorg. Chem. 2009, 1970-1976 beschreiben den Einsatz von CO₂, Magnesium-, Aluminium-, und Zink-Addukten an N-heterocyclische Carbene als (latente) Katalysatoren in der Polyurethansynthese. Diese Katalysatoren bedürfen eines gesonderten Syntheseschritts und müssen aufwendig unter Stickstoff in einer Glovebox gehandhabt werden, was sie für eine praktische Anwendung disqualifiziert. Zudem erfordern diese Katalysatoren erhöhte Temperaturen, was eine Aushärtung bei Raumtemperatur unmöglich macht.

Buchmeiser et al, Chem. Eur. J. 2009, 15, 3103-3109, beschreiben Organo-Zinn-(II)-Addukte an N-heterocyclische Imidazolium-Carbene als ausgeprägt latente (delayed-action) Katalysatoren. In Schema 2 wird ein Wirkungsmechanismus aufgestellt, der die Carbene als katalytisch aktive Spezies den katalytisch inaktiven Imidazoliumionen gegenüberstellt.

JP 2008 201703 beschreibt Imidazoliumsalze zur Verwendung in Medikamenten, Pflanzenschutzmitteln, Elektrolytlösungen und als Katalysatoren für die Härtung von Harzen wie Epoxi- oder Polyurethanharzen, die jedoch durch keinerlei explizites Beispiel gestützt werden.
Es gibt keinen Hinweis auf eine katalytische Aktivität der so hergestellten Imidazolium-Salze für die Umsetzung von Polyisocyanaten und Polyolen für die Anwendung in Lacken, oder alternativen Einsatz zu den üblichen Lewis-Säure-Katalysatoren wie DBTL.

JP 2006 152154 beschreibt den Einsatz ionischer Flüssigkeiten in Bindemitteln und den Einsatz in druckempfindlichen Klebeschichten für elektronische Komponenten mit antistatischen Eigenschaften. Als Beispiel für eine ionische Flüssigkeit wird unter Anderen 1-Methyl-3-butyl-imidazolium-halogenid genannt. Es wird auch eine Umsetzung eines Polyacrylatols mit einem Polyisocyanat offenbart. Katalytische Eigenschaften der ionischen Flüssigkeiten werden nicht beschrieben, genauso wenig die Verbesserung von Härtungseigenschaften oder die Anwendung von Lacken, oder den Einsatz in Polyisocyanaten oder Mischungen aus Polyisocyanaten und Polyolen direkt vor der Anwendung.

Journal of the Brazilian Chemical Society, 2007, 18(6), 1220 - 1223, beschreibt die Amidierung von Isocyanaten mit aromatischen Carbonsäuren in Anwesenheit Ionischer Flüssigkeiten als Reaktionsmedium. Gegenüber anderen Lösungsmitteln wie N,N-Dimethylformamid, N-Methylpyrrolidon und Toluol werden höhere Ausbeuten erhalten, und eine positive Wirkung der Ionischen Flüssigkeiten angeführt. Die prinzipielle Reaktion von Isocyanaten mit Aminen, Alkoholen und Säuren wird lediglich allgemein, jedoch nicht explizit offenbart. Die Ionischen Flüssigkeiten als Lösungsmittel können Katalysatoren in den Umsetzungen ersetzen.
Nachteilig ist, dass die genannten Halogenide bei Lacken auf Metallsubstraten Korrosion herbeiführen können.

Die Dokumente WO 2012/088148 A2, US 2012/156474 A1 und WO 2012/088163 A2 beschreiben die Verwendung von Imidazoliumsalzen beruhend auf aromatischen Carbonsäuren zur Härtung von Epoxyzusammensetzungen für Beschichtungen. Die nicht vorveröffentlichte WO 2013/144056 A1 offenbart ein Verfahren zur organokatalytischen ringöffnenden Polymerisation unter Verwendung von Imidazoliumsalzen.

Die Aufgabe der vorliegenden Erfindung bestand darin, neue Katalysatoren für die Beschichtung mit zweikomponentigen Polyurethanlacken zu entwickeln, die die üblichen metallorganischen Katalysatoren, insbesondere zinnorganische und toxische Verbindungen des Standes der Technik ersetzen können und zusätzlich verbesserte Härtungs- und/oder Beschichtungseigenschaften bewirken.

Eine weitere Aufgabe der vorliegenden Erfindung bestand daher darin, Katalysatoren zu entwickeln, die bei einer tiefen Temperatur, insbesondere unterhalb von 60°C, respektive kurzer Härtungszeit ein gutes Antrocknungsverhalten und / oder schnelle Härteentwicklung haben.

Die in den Tabellen 3 und 4 der Seite 40 der WO 2007/090755 genannten Beispiele für Imidazolium-Katalysatoren mit aliphatischen Carboxylaten, das 1,3-Diisopropylimidazoliumacetat und Pentamethylimidazoliumacetat sind nicht in Butylacetat löslich, sondern mussten in Aceton gelöst werden. Auch ist es erforderlich, diese unter höherem Energieeintrag mit einem Dispermaten und nicht von Hand einzuarbeiten.

Daher bestand eine weitere Aufgabe der vorliegenden Erfindung darin, neue, wirksame Katalysatoren mit guter Löslichkeit in den in der Lacktechnologie eingesetzten Polyol- und IsocyanatKomponenten und Lösungsmitteln zu finden. Bevorzugt sollte ein solcher Katalysator bei Raumtemperatur flüssig sein.

Eine weitere Aufgabe der vorliegenden Erfindung bestand darin, einen Katalysator zu finden, der im Lack eine geringe Farbe entwickelt.

Bei den in den Tabellen 3 und 4 der Seite 40 der WO 2011/061314 gezeigten Ergebnisse mit der Härtung eines Polyisocyanats mit dem Polyacrylatpolyol Joncryl® 507 waren die Pendelhärten mit den dort beschriebenen Imidazoliumcarboxylaten mit aliphatischen Carboxylaten nach Härtung bei erhöhter Temperatur in sieben von zehn Beispielen leicht niedriger als bei den 40 °C-Werten. Von den drei Beispielen, bei denen bei 60 °C höhere Pendelhärten erreicht wurden, waren zwei die oben erwähnten schwer löslichen und daher ungeeigneten Katalysatoren. Insbesondere sollen daher die neuen Katalysatoren gegenüber den bekannten Imidazolium-Salzen mit aliphatischen Carboxylaten, bei Temperaturen unter 110 °C über den gesamten Temperaturbereich wirksam sein und mit steigender Härtungstemperatur besser durchhärten. Dies ist wichtig für alle Anwendungen, die zwingend (große Bauteile) oder bevorzugt (Energieeinsparung) bei niedrigeren Einbrenntemperaturen stattfinden, also unter 110 °C, bevorzugt unter 80 °C, insbesondere unter 60 °C, ganz besonders bevorzugt unter 40 °C.

Insbesondere bei ungefüllten, pigmentfreien High Solid-Systemen mit einem Feststoffgehalt von >58% (bei einer Auslaufzeit von 20 Sekunden im DIN 4-Becher bei 23 °C) werden häufig niedrigviskose Polyole und/oder niedrigviskose Polyisocyanate eingesetzt. Um dies zu erreichen, haben diese insbesondere niedrigere Molmassen, niedrigere Glasübergangstemperaturen bzw. niedrigere Funktionalitäten gegenüber konventionellen Produkten für Standard (Medium Solid) Systeme. Dadurch wird das Härtungsverhalten der Beschichtung verschlechtert. In diesen Fällen sind eine schnellere Reaktion bzw. schnellere Durchhärtung respektive bessere Endeigenschaften bzw. höhere Endhärte mit Hilfe von Katalysatoren von besonderem Vorteil. Insbesondere für derartige Systeme sollen neue Katalysatoren entwickelt werden.

In der Praxis derzeit wohl am weitesten verbreitet ist DBTL (Dibutylzinndilaurat), das negative toxische Eigenschaften verschiedener Art aufweist. Behelfsmäßig wird das weniger toxische homologe DOTL (Dioctylzinndilaurat) favorisiert. Weitere zinnfreie Metallkomplexkatalysatoren sind im Markt anzutreffen.

Die Aufgaben wurden gelöst durch ein Verfahren zur Beschichtung von Substraten mit Beschichtungsmassen, umfassend
- in einem ersten Schritt Beschichten des Substrats mit mindestens einer Beschichtungsmasse enthaltend
- (A) mindestens ein Polyisocyanat, erhältlich durch Umsetzung mindestens eines monomeren Isocyanats,
- (B) mindestens ein Bindemittel, das mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
- (C) mindestens ein Imidazoliumsalz,
- (D) optional mindestens ein Lösungsmittel,
- (E) optional mindestens einen anderen Urethanisierungskatalysator als (C), sowie,
- (F) optional andere anwendungstypische Komponenten und/oder Additive,
   wobei das Imidazoliumsalz (C) die Formel 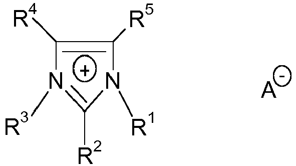 aufweist,
   worin R¹ und R³ unabhängig voneinander für einen organischen Rest mit 1 bis 20 C-Atomen stehen,
   R² für ein H-Atom oder einen organischen Rest mit bis zu 20 C-Atomen steht, R⁴ und R⁵ für ein H-Atom stehen und
   wobei es sich bei A- um das Anion der Benzoesäure handelt.
- optional Trocknen der auf das Substrat aufgebrachten Beschichtungsmasse gefolgt von
- Härten der auf das Substrat aufgebrachten Beschichtungsmasse.

1-Ethyl-3-methyl-imidazolium-benzoat als erfindungsgemäßer besonders bevorzugter Katalysator ist flüssig, gut in Butylacetat löslich und bringt im Lack im Vergleich zu entsprechenden Acetaten eine geringere Vergilbung (s. Beispiele).

Die Löslichkeit von Imidazoliumcarboxylaten in Polyisocyanaten ist schlecht. Dabei kann es selbst bei flüssigen ggf. farblosen Imidazoliumcarboxylaten mit aliphatischen Carboxylaten zur Bildung von teilweise farbigen, roten Schleiern kommen (1-Ethyl-3-methyl-imidazolium-acetat (bernsteinfarben); 1,3-Diethyl-imidazolium-acetat (farblos); 1,3-Diethyl-imidazolium-octanoat (bernsteinfarben). Das erfindungsgemäße Imidazoliumcarboxylat mit aromatischem Carboxylat 1-Ethyl-3-methyl-imidazolium-benzoat ist beim Einrühren per Hand in ein standardmäßig verwendetes isocyanuratgruppenhaltiges Polyisocyanat, z.B. Basonat® HI 100 der BASF SE, dagegen nur gelblich, mit einer Trübung.
Ein Lösen des Katalysators im Lösungsmittel oder Polyol ist generell bevorzugt.

Lacke mit erfindungsgemäßen Katalysatoren weisen gegenüber solchen mit Imidazoliumcarboxylat mit aliphatischen Anionen hergestellten eine höhere Temperaturstabilität in Bezug auf die Farbe aus. Proben aus Geliertests (Innendurchmesser ∼1,8 cm, Länge ∼11 cm) verfärbten sich bei Imidazoliumcarboxylaten mit aliphatischen Carboxylaten als Katalysator innerhalb eines Tages oder nach Lagerung über 14 Tage bei Raumtemperatur optisch gelblich bis gelb, während eine entsprechende Probe mit 1-Ethyl-3-methyl-imidazolium-benzoat als Katalysator auch nach 14 Tagen noch farblos war.

Das erfindungsgemäße Verfahren zeichnet sich dadurch aus, dass eine hohe Härte des Lacksystems insbesondere bei tiefen Härtungstemperaturen unterhalb 110 °C, bevorzugt kleiner 80 °C, besonders bevorzugt kleiner 60 °C und kurzer Härtungszeit erreicht wird (siehe Beispiele). Die Härte übertrifft die Werte der mit gängigen Katalysatoren, insbesondere DBTL, erreichten Werte z.B., bei gleicher Gelier- oder Verarbeitungszeit (siehe Beispiele). Dies erlaubt gegenüber einer Härtung mit z.B. DBTL frühere Bearbeitungszeiten der applizierten und bei gleicher Temperatur getrockneten Lacke, oder niedrigere Härtungstemperaturen.

Gegenüber anderen Imidazolium-carboxylaten mit aliphatischen Anionen zeichnen sich die erfindungsgemäßen Katalysatoren durch eine geringere Farbbildung bei der Lackapplikation aus. Bei den Imidazolium-carboxylaten mit aliphatischen Anionen kann es bei 60-110 °C Härtung des applizierten Lacks für 30 Minuten und anschließender Lagerung für 24 h bei RT zu niedrigeren Pendelhärten kommen als mit z.B. dem erfindungsgemäßen Katalysator 1-Ethyl-3-methyl-imidazolium-benzoat. Bei letzterem werden mit steigender Temperatur zunehmend höhere Pendelhärten erhalten (siehe Beispiele mit Joncryl 507)

Insbesondere bei kurzer Härtung unter Bedingungen von 15 Minuten 60 °C und 2 Stunden Raumtemperatur ergeben sich mit dem erfindungsgemäßen 1-Ethyl-3-methyl-imidazolium-benzoat deutlich bessere Pendelhärten als bei Verwendung nicht erfindungsgemäßer Katalysatoren.

Insgesamt erwiesen sich erfindungsgemäße Imidazoliumcarboxylat-Katalysatoren wie 1-Ethyl-3-methyl-imidazolium-carboxylate mit aromatischer Carboxylatgruppe als Benzoat, als bei tiefen Temperaturen schneller härtend als literaturbekannte Verbindungen, ohne dass es bei Temperaturen größer 60 °C in Kombination mit dem Polyacrylatol Joncryl® 507 zu einem Abfall der Pendelhärten kam. Dies ist wichtig für praxisrelevante Lackeigenschaften wie Staubtrocknung, Anfassbarkeit, Durchhärtung, Polierbarkeit, Blockfestigkeit und Stapelbarkeit. Zudem ist das Farb- und Löslichkeitsverhalten besser als das der aliphatischen Carboxylate der Imidazolium-Katalysatoren.

### Polyisocyanate (A)

Die für die Herstellung der Polyisocyanate eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird, besonders bevorzugt sind aliphatische Isocyanate.

Aromatische Isocyanate sind solche, die mindestens ein aromatisches Ringsystem enthalten, also sowohl rein aromatische wie auch araliphatische Verbindungen. Von Natur zeigen die aromatischen Isocyanate eine höhere Reaktivität, die sich durch den Einsatz der erfindungsgemäßen Katalysatoren noch steigern lässt.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in Betracht. Dafür eignen sich beispielsweise Triisocyanate wie Triisocyanatononan, 2'-Isocy-anato-ethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanats, (z.B. Methyl- oder Ethyl-2,6-diisocyanatohexanoat), Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocy-anatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diiso-cyanato-1-methylcyclohexan sowie 3 (bzw. 4), 8 (bzw. 9)-Bis(isocyanatomethyl)-tricy-clo[5.2.1.0²⁶]decan-Isomerengemische, sowie aromatische Diisocyanate wie 2,4- oder 2,6-To-luylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30-90:10.

Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)-aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht messbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate einen Gesamtgehalt an hydrolysierbarem Chlor von weniger als 100 ppm auf, besonders bevorzugt weniger als 30 ppm, insbesondere weniger als 20 ppm und speziell weniger als 10 ppm. Dies kann beispielsweise gemessen werden durch die ASTM-Vorschrift D4663-98. Die Gehalte an gesamtem Chlor liegen beispielsweise bei unter 1000 ppm, bevorzugt unter 800 ppm und besonders bevorzugt unter 500 ppm (ermittelt per argentometrischer Titration nach Hydrolyse).

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate (A), zu denen die monomeren Isocyanate oligomerisiert werden können, sind in der Regel wie folgt charakterisiert:
Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew%.

Bevorzugt handelt es sich bei den Polyisocyanaten (A) um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Trisisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
   Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 % bezogen auf das Polyisocyanat.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden häufig im Gemisch mit anderen Polyisocyanaten, insbesondere den unter 1) genannten, erhalten. Uretdiongruppen aufweisende Polyisocyanate weisen üblicherweise Funktionalitäten von 2 bis 3 auf. Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen (A). Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,0 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Bismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden.
   Diese Urethan- und/oder Allophanatgruppen aufweisenden Polyisocyanate treten häufig in Mischformen mit den unter 1) genannten Polyisocyanaten auf.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt von 10 bis 25 Gew.-% und eine mittlere NCO-Funktionalität von 3 bis 8 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual Cure Anwendungen, d.h. Polyisocyanate, die neben den unter 1-13 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

In einer bevorzugten Ausführungsform der vorliegenden Erfindung ist das Polyisocyanat (A) ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt handelt es sich um ein isocyanuratgruppenhaltiges Polyisocyanat.

In einer besonders bevorzugten Ausführungsform handelt es sich bei dem Polyisocyanat (A) um Isocyanuratgruppen enthaltende Polyisocyanate von 1,6-Hexamethylendiisocyanat.

In einer weiteren besonders bevorzugten Ausführungsform handelt es sich bei dem Polyisocyanat (A) um ein Gemisch von Isocyanuratgruppen enthaltenden Polyisocyanaten, ganz besonders bevorzugt von 1,6-Hexamethylendiisocyanat und von Isophorondiisocyanat.

In einer besonders bevorzugten Ausführungsform handelt es sich bei dem Polyisocyanat (A) um ein Gemisch enthaltend niedrigviskose Polyisocyanate, bevorzugt Isocyanuratgruppen enthaltende Polyisocyanate, mit einer Viskosität von 200-1500 mPa*s, bevorzugt 400-1300, niederviskose Urethane und/oder Allophanate mit einer Viskosität von 200-1600 mPa*s, insbesondere 600-1500 mPa*s, und/oder Iminooxadiazindiongruppen enthaltende Polyisocyanate.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Das Verfahren zur Herstellung der Polyisocyanate kann erfolgen, wie in WO 2008/68198 beschrieben, dort besonders von Seite 20, Zeile 21 bis Seite 27, Zeile15, was hiermit durch Bezugnahme Bestandteil der vorliegenden Anmeldung sei.

Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40, was hiermit jeweils durch Bezugnahme Bestandteil der vorliegenden Anmeldung sei.

Die Reaktion kann alternativ auch abgebrochen werden, wie in WO 2005/087828 von Seite 11, Zeile 12 bis Seite 12, Zeile 5 beschrieben, was hiermit durch Bezugnahme Bestandteil der vorliegenden Anmeldung sei.

Bei thermisch labilen Katalysatoren ist es weiterhin auch möglich, die Reaktion abzubrechen durch Erhitzen des Reaktionsgemischs auf eine Temperatur oberhalb von mindestens 80°C, bevorzugt mindestens 100 °C, besonders bevorzugt mindestens 120 °C. Dafür reicht in der Regel bereits die Erwärmung des Reaktionsgemischs, wie sie zur Abtrennung des unumgesetzten Isocyanats durch Destillation in der Aufarbeitung erforderlich ist.
Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, Carbamate wie Hydroxyalkylcarbamat oder organische Carbonsäuren.

Diese Verbindungen werden pur oder verdünnt in geeigneter Konzentration, die zum Reaktionsabbruch erforderlich ist, zugegeben.

Bei dem Bindemittel (B) handelt es sich um mindestens einen Polymertyp, beispielsweise ein bis drei, bevorzugt ein bis zwei und besonders bevorzugt genau einen Polymertyp, die mindestens zwei gegenüber Isocyanat reaktive Gruppen aufweist, bevorzugt 2 bis 15, besonders bevorzugt 2 bis 8 und ganz besonders bevorzugt 3 bis 7.

Bei den gegenüber Isocyanat reaktiven Gruppen handelt es sich um Hydroxy-, primäre oder sekundäre Aminogruppen, insbesondere um Hydroxygruppen, unter diesen bevorzugt primäre oder sekundäre Hydroxygruppen, besonders bevorzugt primäre Hydroxygruppen.

Bei den Bindemitteln kann es sich beispielsweise um Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Kopolymerisate mit Allylethern, Propfpolymerisate aus den genannten Stoffgruppen mit z.B. unterschiedlichen Glasübergangstemperaturen, sowie Mischungen der genannten Bindemittel handeln. Bevorzugt sind Polyacrylatpolyole, Polyesterpolyole und Polyurethanpolyole.

Bevorzugte OH-Zahlen, gemessen gemäß DIN 53240-2 (potentiometrisch), sind 40-350 mg KOH/g Festharz für Polyester, bevorzugt 80-180 mg KOH/g Festharz, und 15-250 mg KOH/g Festharz für Polyacrylatole, bevorzugt 80-160 mg KOH/g.
Bevorzugte Bindemittel weisen bezogen auf den Festkörpergehalt eine Säurezahl gemäß DIN EN ISO 3682 (potentiometrisch) von weniger als 100 mg KOH/g, bevorzugt weniger als 60, besonders bevorzugt weniger als 30 und ganz besonders bevorzugt weniger als 10 mg KOH/g auf.

Die Säuregruppen können dabei frei vorliegen oder mit einer Base neutralisiert sein. Beispiele für Basen sind anorganische und organische Basen, wie Ammonium-, Alkali- und Erdalkalihydroxide, -oxide, -carbonate, -hydrogencarbonate sowie Ammoniak oder tertiäre Amine.

Beispiele für organische Basen sind Amine, bevorzugt tertiäre Amine, beispielsweise Trimethylamin, Triethylamin, Tributylamin, Di-*iso*-Propyl-ethyl-amin, Benzyldimethylamin, Triethanolamin, Dimethylethanolamin, Diethylethanolamin, Methyldiethanolamin, Ethyldiethanolamin, Tripropanolamin, 1,4-Diazabicyclo[2.2.2]octan (DABCO), 1,5-Diazabicyclo[4.3.0]non-5-en (DBN) und 1,8-Diazabicyclo[5.4.0]undec-7-en (DBU).
Denkbar, wenn auch weniger bevorzugt, ist der Einsatz von primären oder sekundären Aminen als Basen, beispielsweise Methylamin, Ethylamin, n-Propylamin, iso-Propylamin, n-Butylamin, tert-Butylamin, Ethanolamin, Propanolamin, Benzylamin, Anilin, Dimethylamin, Diethylamin, Din-Propylamin, Di-iso-Propylamin, Di-n-Butylamin, Diethanolamin, Dipropanolamin, 2-Aminoethylethanolamin, Dibenzylamin, Pyrrolidon, Piperidin, Piperazin und Morpholin.

Bevorzugt ist 1,4-Diazabicyclo[2.2.2]octan (DABCO).

Besonders bevorzugte Bindemittel (B) sind Polyacrylatpolyole und Polyesterole.

Polyacrylatpolyole weisen bevorzugt ein Molekulargewicht Mₙ von mindestens 500, besonders bevorzugt mindestens 1200 g/mol auf. Das Molekulargewicht Mₙ kann prinzipiell nach oben unbegrenzt sein, bevorzugt bis zu 50.000, besonders bevorzugt bis zu 20.000 g/mol, ganz besonders bevorzugt bis zu 10.000 g/mol und insbesondere bis zu 5.000 g/mol betragen.

Die hydroxyfunktionellen Monomere (siehe unten) werden in solchen Mengen bei der Kopolymerisation mit verwendet, dass die obengenannten Hydroxylzahlen der Polymerisate resultieren, die im allgemeinen einem Hydroxygruppengehalt der Polymerisate von 0,5 bis 8, vorzugsweise 1 bis 5 Gew.-% entsprechen.

Dabei handelt es sich um hydroxygruppenhaltige Kopolymere aus mindestens einem hydroxygruppenhaltigen (Meth)acrylat mit mindestens einem weiteren polymerisationsfähigen Komonomer ausgewählt aus der Gruppe bestehend aus (Meth)acrylsäurealkylestern, Vinylaromaten, α, β-ungesättigten Carbonsäuren und anderen Monomeren.

Als (Meth)acrylsäurealkylestern genannt seien z.B. C₁-C₂₀-Alkyl(meth)acrylate, Vinylaromaten sind solche mit bis zu 20 C-Atomen, α,β-ungesättigte Carbonsäuren umfassen auch deren Anhydride und andere Monomere sind beispielsweise Vinylester von bis zu 20 C-Atomen enthaltenden Carbonsäuren, ethylenisch ungesättigte Nitrile, Vinylether von 1 bis 10 C-Atome enthaltenden Alkoholen und, weniger bevorzugt, aliphatische Kohlenwasserstoffe mit 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat und Vinylacetat.

α, β-Ungesättigte Carbonsäuren und deren Anhydride können beispielsweise sein Acrylsäure, Methacrylsäure, Fumarsäure, Crotonsäure, Itaconsäure, Maleinsäure oder Maleinsäureanhydrid, bevorzugt Acrylsäure.
Als hydroxyfunktionelle Monomere seien Monoester von α,β-ungesättigten Carbonsäuren, wie Acrylsäure, Methacrylsäure (in dieser Schrift kurz als "(Meth)acrylsäure" bezeichnet), mit Di- oder Polyolen erwähnt, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 4500, bevorzugt 250 bis 2000, Poly-1,3-propandiol oder Polypropylenglykol mit einem Molgewicht zwischen 134 und 2000 oder Polyethylenglykol mit einem Molgewicht zwischen 238 und 2000 sein.

Bevorzugt sind 2-Hydroxyethylacrylat, 2-Hydroxyethylmethacrylat, 2- oder 3-Hydroxypropyl-acrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Als vinylaromatische Verbindungen kommen z.B. Vinyltoluol, α-Butylstyrol, α-Methylstyrol, 4-n-Butyl-styrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexylether und Vinyloctylether.

Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt.

Weiterhin sind N-Vinylformamid, N-Vinylpyrrolidon sowie N-Vinylcaprolactam einsetzbar, weiterhin, ethylenisch ungesättigte Säuren, insbesondere Carbonsäuren, Säureanhydride oder Säureamide, sowie Vinylimidazol. Auch Epoxidgruppen aufweisende Komonomere wie z.B. Glycidylacrylat oder -methacrylat oder Monomere wie N-Methoxymethylacrylamid oder -methacrylamid können in geringen Mengen mit verwendet werden.

Bevorzugt sind Ester der Acrylsäure bzw. der Methacrylsäure mit 1 bis 18, vorzugsweise 1 bis 8 Kohlenstoffatomen im Alkoholrest wie z.B. Methylacrylat. Ethylacrylat, Iso-propylacrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomere.
Die Hydroxygruppen tragenden Monomere werden in die Kopolymerisation zur Herstellung der Hydroxygruppen tragenden Poly(meth)acrylate im Gemisch mit anderen polymerisierbaren, bevorzugt radikalisch polymerisierbaren Monomeren, eingesetzt, bevorzugt solche, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymere, die neben den Hydroxygruppen tragenden Monomeren zu mehr als 60 Gew% aus C₁-C₁₀-Alkyl(meth)acrylaten, Styrol und dessen Derivaten oder deren Mischungen bestehen.

Die Herstellung der Polymerisate kann durch Polymerisation nach üblichen Verfahren durchgeführt werden. Vorzugsweise erfolgt die Herstellung der Polymerisate in einer Emulsionspolymerisation oder in organischer Lösung. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird das Lösungsmittel allein oder mit einem Teil des Monomergemischs vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Optional wird anschließend noch nachaktiviert, um die Polymerisation bis zu einem Umsatz von mindestens 99 % durchzuführen.

Als Lösungsmittel kommen beispielsweise Aromaten, wie Solvent Naphtha, Benzol, Toluol, Xylol, Chlorbenzol, Ester wie Ethylacetat, Butylacetat, Methylglykolacetat,
Ethylglykolacetat, Methoxypropylacetat, Ether wie Butylglykol, Tetrahydrofuran, Dioxan, Ethylglykolether, Ketone, halogenhaltige Lösemittel wie Methylenchlorid oder Trichlormonofluorethan in Betracht.

Weitere Bindemittel (B) sind z.B. Polyesterpolyole, wie sie durch Kondensation von Polycarbonsäuren, insbesondere Dicarbonsäuren mit Polyolen, insbesondere Diolen erhältlich sind. Um eine für die Polymerisation angemessene Funktionalität des Polyesterpolyols zu gewährleisten werden partiell auch Triole, Tetrole etc. wie auch Trisäuren, etc. eingesetzt.

Polyesterpolyole, sind z.B. aus Ullmanns Enzyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und optional, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 4500, bevorzugt 250 bis 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die optional wie oben beschrieben alkoxiliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglykol, Butan-1,4-diol, Hexan-1,6-diol, Octan-1,8-diol und Dodecan-1,12-diol. Weiterhin bevorzugt ist Neopentylglykol.

Ferner kommen auch Polycarbonat-Diole in Betracht, wie sie z.B. durch Umsetzung von Phosgen mit einem Überschuss von den als Aufbaukomponenten für die Polyesterpolyole genannten niedermolekularen Alkohole erhalten werden können.

Geeignet sind auch Polyesterdiole auf Lacton-Basis, wobei es sich um Homo- oder Mischpolymerisate von Lactonen, bevorzugt um endständige Hydroxygruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxy-benzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

In Polyurethanlacken sind Molmassen Mₙ der Polyester von 800 - 4000 g/mol üblich, wobei die hier verwendeten Polyester nicht darauf beschränkt sind.

Weiterhin sind als Bindemittel auch Polyetherole geeignet, die durch Addition von Ethylenoxid, Propylenoxid und/oder Butylenoxid, bevorzugt Ethylenoxid und/oder Propylenoxid und besonders bevorzugt Ethylenoxid an H-aktive Komponenten hergestellt werden. Ebenso sind Polykondensate aus Butandiol geeignet. In Polyurethanlacken sind Molmassen der Polyether von 500-2000 g/mol üblich, wobei die hier verwendeten Polyether nicht darauf beschränkt sind.

Die Polymeren können zumindest teilweise durch sogenannte Reaktivverdünner ersetzt werden. Dabei kann es sich um blockierte sekundäre oder primäre Amine (Aldimine und Ketime) oder um Verbindungen mit sterisch gehinderten und / oder elektronenarmen sekundären Aminogruppen handeln, beispielsweise Asparaginsäureester gemäß EP 403921 oder WO 2007/39133.

### (C) Imidazoliumsalz

Bei der Verbindung (C) handelt es sich um mindestens ein, beispielsweise ein bis drei, bevorzugt ein bis zwei und besonders bevorzugt genau ein Imidazoliumsalz der Formel I 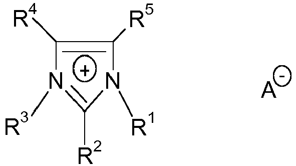
worin R¹ und R³ unabhängig voneinander für einen organischen Rest mit 1 bis 20 C-Atomen stehen,
R² für ein H-Atom oder einen organischen Rest mit bis zu 20 C-Atomen steht, R⁴ und R⁵ für ein H-Atom stehen und A- für das Benzoatanion steht.

R¹ und R³ stehen vorzugsweise unabhängig voneinander für einen organischen Rest mit 1 bis 10 C-Atomen. Der organische Rest kann auch noch weitere Heteroatome, insbesondere Sauerstoffatome, Stickstoff-, Schwefel oder Phosphoratome oder funktionelle Gruppen, zum Beispiel Hydroxygruppen, Ethergruppen, Estergruppen oder Carbonylgruppen enthalten.

Insbesondere stehen R¹ und R³ für einen Kohlenwasserstoffrest, der außer Kohlenstoff und Wasserstoff allenfalls noch Hydroxygruppen, Ethergruppen, Estergruppen oder Carbonylgruppen enthalten kann.

R¹ und R³ stehen besonders bevorzugt unabhängig voneinander für einen Kohlenwasserstoffrest mit 1 bis 20 C- Atomen, insbesondere mit 1 bis 10 C-Atomen, der keine sonstigen Heteroatome, z. B. Sauerstoff oder Stickstoff, enthält. Der Kohlenwasserstoffrest kann aliphatisch (wobei auch ungesättigte aliphatische Gruppen eingeschlossen sind) oder aromatisch sein oder sowohl aromatische als auch aliphatische Gruppen enthalten. Vorzugsweise stehen R¹ und R³ für einen aliphatischen Kohlenwasserstoffrest.

Als Kohlenwasserstoffreste genannt seien z.B. die Phenylgruppe, Benzylgruppe, eine durch eine oder mehrere C₁ bis C₄ Alkylgruppen substituierte Phenylgruppe oder Benzylgruppe, die Mesitylgruppe, Alkylgruppen und Alkenylgruppen, insbesondere die Alkylgruppe.

Ganz besonders bevorzugt stehen R¹ und R³ unabhängig voneinander für eine C₁ bis C₁₈ Alkylgruppe, bevorzugt für eine C₁ bis C₁₆, besonders bevorzugt eine C₁ bis C₁₄, ganz besonders bevorzugt C₁ bis C₁₂ und insbesondere C₁ bis C₁₀ Alkylgruppe. Als Alkylgruppe stellt eine C₁ bis C₆ Alkylgruppe eine besondere Ausführungsform dar und in einer ganz besonderen Ausführungsform handelt es sich bei der Alkylgruppe um eine C₁ bis C₄ Alkylgruppe.

Ganz besonders bevorzugt stehen R¹ und R³ unabhängig voneinander für eine Methyl-, Ethyl-, n-Propyl-, Isopropyl-, n-Butyl-, sec.-Butyl, tert.-Butyl- oder 2-ethylhexyl-Gruppe, wobei die Methyl-, Ethyl-, n-Propyl- und n-Butylgruppe besondere Bedeutung haben.

Vorzugsweise steht R¹ für eine C₁ bis C₆, insbesondere eine C₁ bis C₄ Alkylgruppe.

Vorzugsweise steht R³ für eine Methylgruppe.

In einer bevorzugten Ausführungsform steht R² für ein H-Atom.

In einer anderen bevorzugten Ausführungsform steht R² für eine Alkylgruppe, beispielsweise für eine C₁ bis C₁₈ Alkylgruppe, bevorzugt für eine C₁ bis C₁₆, besonders bevorzugt eine C₁ bis C₁₄, ganz besonders bevorzugt C₁ bis C₁₂ und insbesondere C₁ bis C₁₀ Alkylgruppe. Für den R est R² stellt eine C₁ bis C₆ Alkylgruppe eine besondere Ausführungsform dar und in einer ganz besonderen Ausführungsform handelt es sich bei der Alkylgruppe um eine C₁ bis C₄ Alkylgruppe.

R⁴ und R⁵ stehen für ein Wasserstoffatom.
Vorzugsweise stehen R¹ und R² für einen aliphatischen Kohlenwasserstoffrest.

Als Kohlenwasserstoffreste genannt seien z.B. die Phenylgruppe, Benzylgruppe, eine durch eine oder mehrere C₁ bis C₄ Alkylgruppen substituierte Phenylgruppe oder Benzylgruppe, die Mesitylgruppe, Alkylgruppen und Alkenylgruppen, insbesondere die Alkylgruppe.

In einer weiteren besonderen Ausführungsform stehen R², R⁴ und R⁵ jeweils für H-Atome. Beispiele für Imidazoliumionen sind 1,2-Dimethyl-3-propylimidazolium, 1-Ethyl-2,3-dimethylimidazolium, 1-Butyl-2,3-dimethylimidazolium, 1-Benzyl-3-methylimidazolium, 3-Ethyl-1-methylimidazolium, 1-Propyl-3-methylimidazolium, 3-n-Butyl-1-methylimidazolium, 1-Hexyl-3-methylimidazolium, 1-Methyl-3-octylimidazolium, 1-Decyl-3-methylimidazolium, 1-Dodecyl-3-methylimidazolium, 1,3-Diethylimidazolium, 1,3-Diisopropylimidazolium, 1,3-Di-n-butylimidazolium, 1,3-Dihexylimidazolium.

Bevorzugte Imidazoliumionen sind 3-Ethyl-1-methylimidazolium, 1,3-Diethylimidazolium, 1,3-Dihexylimidazolium und 1,3-Di-n-butylimidazolium.

In einer bevorzugten Variante sind R², R⁴ und R⁵ gleich Wasserstoff.

In einer anderen bevorzugten Variante sind R¹ und R³ gleich.

In einer bevorzugten Ausführungsform weist mindestens einer der beiden Reste R¹ und R³ mindestens 4 Kohlenstoffatome auf, besonders bevorzugt ist mindestens einer dieser Reste n-Butyl, Hexyl oder 2-Ethylhexyl. Dies bewirkt eine erhöhte Löslichkeit in Lösungsmitteln und lösungsmittelhaltigen Beschichtungsmassen.
In einer weiteren bevorzugten Ausführungsform sind R¹ und R³ gleich und jeweils besonders bevorzugt Methyl, Ethyl oder n-Butyl. Dies bewirkt in der Regel eine geringere Toxizität und/oder Umwelttoxizität der Verbindungen.

Beim Anion A- in Formel I handelt es sich um das Anion der Benzoesäure.
Die Synthese derartiger Imidazoliumionen mit Carboxylatanionen als Gegenion ist beispielsweise beschrieben in WO 2009/040242. Die Synthese der symmetrischen Imidazoliumsalze ist beispielsweise beschrieben in WO 2009/074535 A2.
Die Aufarbeitung kann beispielsweise erfolgen wie in WO 2009/027250 A2 beschrieben.

Als bevorzugte Beispiele für Imidazolium-Katalysatoren seien solche genannt, bei denen R² = R⁴ = R⁵ = H ist und R¹ und R³ n-Alkylreste mit Kettenlängen gemäß der nachstehenden Tabelle und das Anion ein aromatisches oder heteroaromatisches, bevorzugt aromatisches Carboxylatanion ist:

| Anzahl der Kohlenstoffatome in R¹ | Anzahl der Kohlenstoffatome in R³ |
|---|---|
| 1 | 1 |
| 2 | 1 |
| 2 | 2 |
| 3 | 1 |
| 4 | 1 |
| 4 | 2 |
| 4 | 4 |
| 6 | 1 |
| 8 | 1 |
| 10 | 1 |
| 12 | 1 |
| 16 | 1 |
| 18 | 1 |

Des Weiteren seien entsprechende Verbindungen genannt mit einem R² als n-Alkylrest mit Kettenlänge gemäß der nachstehenden Tabelle:

| Anzahl der Kohlenstoffatome in R¹ | Anzahl der Kohlenstoffatome in R² | Anzahl der Kohlenstoffatome in R³ |
|---|---|---|
| 1 | 1 | 1 |
| 2 | 1 | 1 |
| 2 | 2 | 2 |
| 4 | 1 | 1 |

Des Weiteren sei genannt: 1-Methyl-3-vinylimidazolium-carboxylat, insbesondere 1-Methyl-3-vinylimidazolium-benzoat; 1-Benzyl-3-methylimidazolium-carboxylat, insbesondere 1-Benzyl-3-methylimidazolium-benzoat.

Es stellt einen Vorteil der Verbindungen (C) dar, wenn diese bei 1 bar einen Schmelzpunkt von nicht mehr als 60 °C, bevorzugt nicht mehr als 40 °C und besonders bevorzugt nicht mehr als 20 °C aufweisen.

In Lackanwendungen mit aliphatischen Polyisocyanaten sind häufig Komponenten mit niedriger Eigenfarbe bevorzugt (z.B. Klarlack). Es stellt daher einen Vorteil der Verbindungen (C) dar, wenn ihre Eigenfarbe, gegebenenfalls nach Reinigungsschritten, möglichst gering ist. In einer bevorzugten Form sind dies Jodfarbzahlen (DIN 6162) unter 20, besonders bevorzugt unter 15, ganz besonders bevorzugt unter 10, insbesondere unter 5 und speziell unter 1.

Des Weiteren kann optional noch ein Lösungsmittel oder Lösungsmittelgemisch (D) anwesend sein.
Als Lösungsmittel einsetzbar sind solche, die bevorzugt keine gegenüber Isocyanatgruppen oder verkappten Isocyanatgruppen reaktiven Gruppen aufweisen.

Mögliche Lösungsmittel (D) sind z.B. Ester, Ether, Ketone, aromatische Lösungsmittel, alkoxylierte Alkansäurealkylester, Carbonate, respektive Gemische der Lösungsmittel.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Ethylmethylketon, Diethylketon, Isobutylmethylketon, Methylamylketon und tert-Butylmethylketon. Aceton ist wegen seines Flammpunkts weniger bevorzugt.

Als aromatischer Kohlenwasserstoff sind insbesondere Xylol und Toluol bevorzugt, insbesondere Xylol. Aromatengemische sind prinzipiell auch geeignet, aber weniger bevorzugt, da sie in Verbindung mit den genannten ionischen Flüssigkeiten als Katalysatoren zur Farbbildung in der durchgehärteten Masse führen können. Beispiele dafür sind die Solvesso®-Marken der Firma ExxonMobil Chemical, besonders Solvesso® 100 (CAS-Nr. 64742-95-6, überwiegend Cg und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170).
Zusammen mit ionischen Flüssigkeiten als Katalysatoren sind Solvesso®-Marken weniger geeignet, sofern sie zu einer Verfärbung im Lack führen.

Weitere mögliche Lösungsmittel sind Butylglykoldiacetat (Merck Schuchardt OHG), Butylglykolacetat (Merck Schuchardt OHG), Dipropylenglykoldimethylether (Proglyde® DMM, Sigma-Aldrich, Deutschland), 3-Methoxy-n-butylacetat (Butoxyl, F.B. Silbermann GmbH), Dipropylenglykol-n-butylether (BDG, Dowanol® DPnB, Dow Chemical Company) und Propylencarbonat. Auch können Alkohole als Lösungsmittel eingesetzt werden, sollten aber in der Menge klein gehalten werden, insbesondere, wenn es sich um monofunktionelle Alkohole handelt. Alkohole sind weniger bevorzugt.

Bevorzugte Lösungsmittel sind n-Butylacetat, Ethylacetat, 1-Methoxypropylacetat-2,2-Methoxyethylacetat, Xylol, Toluol, sowie deren Gemische.

Als Lösungsmittel für die Imidazoliumsalze sind bevorzugt solche einsetzbar, in denen sich die Imidazoliumsalze bei 23 °C zu mehr als 1 Gew%, bevorzugt zu mehr als 10 Gew% lösen. Bei schwerer löslichen und bei Raumtemperatur festen Imidazoliumsalzen sind insbesondere Ketone wie Aceton und Ethylmethylketon als Lösungsmittel geeignet. Aceton ist aufgrund seines Flammpunkts weniger bevorzugt.

In einer bevorzugten Variante werden die Imidazoliumsalze ohne Einsatz von Lösungsmitteln direkt in einer der Komponenten (Polyol oder Isocyanat-haltige Komponente) gelöst, bevorzugt im Polyol.

Des Weiteren kann optional, wenn auch weniger bevorzugt, noch mindestens ein weiterer Urethanisierungskatalysator (E) anwesend sein. Dabei kann es sich zum Beispiel um ein Amin (E1) oder eine metallorganische Verbindung (E2) halten.

Amine (E1) sind beispielsweise tertiäre aliphatische, cycloaliphatische oder aromatische Amine. Beispiele dafür sind Triethylamin, Tri-n-butylamin, N-Methylmorpholin, N-Methyl piperidin, Pyrrolidin, Chinuclidin, bevorzugt 1,4-Di-aza-bicyclo-[2.2.2]-octan.

Als Metallorganische Verbindung (E2) kommen z.B. Zinnverbindungen in Frage, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die toxikologisch bedenklichen Dialkylzinn-(IV)-salze von organischen Carbonsäuren, z.B. Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat, insbesondere Dibutylzinn-dilaurat.

Weitere und stärker bevorzugte Lewis-saure organische Metallverbindungen sind Zinksalze, beispielsweise Zink-(II)-diacetat und Zink-(II)-dioctoat.

Als Zinn- und Zink-freie Alternativen werden bevorzugt u.a. organische Metallsalze des Bismuts, Zirkons, Titans, Aluminiums, Cers, Cäsiums, Eisens, Mangans, Nickels und Cobalts eingesetzt.

Dies sind z.B. Zirkoniumtetraacetylacetonat (z.B. K-KAT® 4205 der Firma King Industries); Zirkoniumdionate (z.B. K-KAT® XC-9213; XC-A209 und XC-6212 der Firma King Industries); Bismut-Verbindungen, insbesondere Tricarboxylate (z.B. K-KAT® 348, XC-B221; XC-C227, XC 8203 der Firma King Industries); Aluminiumdionat (z.B. K-KAT® 5218 der Firma King Industries). Zinn- und Zink-freie Katalysatoren werden ansonsten z.B. auch unter dem Handelsnamen Borchi® Kat der Firma Borchers, TK der Firma Goldschmidt oder BICAT® der Firma Shepherd, Lausanne angeboten.

Bismut-Katalysatoren sind insbesondere Bismut-carboxylate, insbesondere Bismut-octoate, - ethylhexanoate, -neodecanoate, oder -pivalate; beispielsweise K-KAT 348 und XK-601 von King Industries, TIB KAT 716, 716LA, 716XLA, 718, 720, 789 von TIB Chemicals und solchen von Shepherd Lausanne, sowie Katalysator-Mischungen von z.B. Bismut- und Zink-Organylen.

Weitere Metallkatalysatoren werden von Blank et al. in Progress in Organic Coatings, 1999, Vol. 35, Seiten 19-29 beschrieben.

Diese Katalysatoren sind je nach dem für lösungsmittel-, wasser-basierte und/oder blockierte Systeme geeignet.

Molybdän-, Wolfram- und Vanadium-Katalysatoren, werden insbesondere für den Umsatz blockierter Polyisocyanate unter WO 2004/076519 und WO 2004/076520 beschrieben.

Bevorzugte Lewis-saure organische Metallverbindungen sind Dibutylzinn-dilaurat, Dioctylzinn-dilaurat, Zink-(II)-diacetat, Zink-(II)-dioctoat, Zirkon-Acetylacetonat und Zirkon-2,2,6,6-tetra-methyl-3,5-heptandionat und Bismut-Verbindungen, aus toxikologischen Gründen, insbesondere die nicht-Zinn-haltigen Verbindungen.

Als weitere lacktypische Komponenten und/oder Additive (F) können beispielsweise verwendet werden: Stabilisatoren, UV-Stabilisatoren wie UV-Absorber und geeignete Radikalfängern (insbesondere HALS-Verbindungen, Hindered Amin Light Stabilizer), Aktivatoren (Beschleuniger), Trockenmittel, Füllmittel, Pigmente, Farbstoffe, antistatische Agenzien, Flammschutzmittel, Verdicker, thixotrope Agenzien, oberflächenaktive Agenzien, Viskositätsmodifikatoren, Plastifizierer oder Chelatbildner. Bevorzugt sind UV-Stabilisatoren.

Stabilisatoren sind mindestens eine stabilisierend wirkende Verbindung, wobei mit "stabilisierend" die Eigenschaft bezeichnet ist, die Entwicklung einer Farbzahl und/oder der Viskosität der Komponente A im Verlauf der Lagerung über einen gewissen Zeitraum gegenüber solchen entsprechenden Mischungen zu verringern, die keine stabilisierend wirkenden Verbindungen enthalten.
Die Stabilisierung kann sich sowohl auf die Komponente (A) alleine beziehen, wie auch auf Vormischungen der Komponenten (A), (C), optional unter Zugabe weiterer Komponenten. Dies beinhaltet in einer besonderen Ausführung die Lagerung einer dieser Komponenten vor der eigentlichen Lackapplizierung.

Bevorzugt sind diese stabilisierend wirkenden Verbindungen ausgewählt aus der Gruppe bestehend aus primären Antioxidantien (Radikalfänger), sekundären Antioxidantien (Verbindungen, die die Radikalbildung verhindern, insbesondere indem sie Peroxide abfangen und/oder zersetzen) und sauren Stabilisatoren (Bronsted-Säuren).

Bei den primären Antioxidantien handelt es sich bevorzugt um sterisch gehinderte Phenole. Derartige sterisch gehinderte Phenole sind beispielsweise beschrieben in WO 2008/116894, bevorzugt die dort von Seite 14, Zeile 10 bis Seite 16, Zeile 10 beschriebenen Verbindungen, was hiermit per Bezugnahme Bestandteil der vorliegenden Offenbarung sei.

Die sekundären Antioxidantien sind bevorzugt ausgewählt aus der Gruppe bestehend aus Phosphiten, Phosphoniten, Phosphonaten und Thioethern.

Phosphite sind Verbindungen des Typs P(OR^{a})(OR^{b}) (OR^{c}) mit R^{a}, R^{b}, R^{c} als gleichen oder unterschiedlichen aliphatischen, cycloaliphatischen oder aromatischen Resten, die optional auch cyclische oder spiro-Strukturen aufbauen können, so dass zwei der Reste R^{a}, R^{b} und R^{c} miteinander verbunden sind und gemeinsam mit dem Phosphoratom einen Ring bilden.

In einer Ausführungsform bedeuten R^{a}, R^{b} und R^{c} unabhängig voneinander eine C₁ bis C₁₈ Alkylgruppe, bevorzugt für eine C₁ bis C₁₆, besonders bevorzugt eine C₁ bis C₁₄, ganz besonders bevorzugt C₁ bis C₁₂ und insbesondere C₁ bis C₁₀ Alkylgruppe. Insbesondere sind R^{a}, R^{b} und R^{c} jeweils gleich und ausgewählt aus der Gruppe bestehend aus Methyl, Ethyl, n-Butyl, n-Hexyl und n-Octyl.

In einer bevorzugten Ausführungsform handelt es sich bei den Resten R^{a}, R^{b} und R^{c} um optional substituierte aromatische Reste mit 6 bis 12 Kohlenstoffatomen.

Bevorzugt sind R^{a}, R^{b} und R^{c} ausgewählt aus der Gruppe bestehend aus Phenyl, o-, m- oder p-Tolyl, o-, m- oder p-Chlorphenyl, 2,6-Dimethylphenyl, 2,3,6-Trimethylphenyl und Naphthyl.

Weiterhin bevorzugt sind Phosphite der Formel 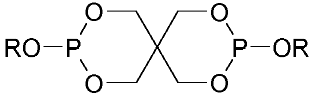 wobei R bevorzugt eine Aryl-Gruppe ist, die in 2, 4, und 6-Position wie folgt substituiert ist:
Position 2: tert. Butyl, tert. Amyl
Position 4: Wasserstoff, Alkyl, tert. Butyl oder tert. Amyl, und
Position 6: Wasserstoff, Alkyl, tert. Butyl oder tert. Amyl,
mit der Maßgabe, dass mindestens einer der Substituenten in Position 4 und 6 ungleich Wasserstoff ist,

Bevorzugte Beispiele für derartige Verbindungen sind:
- "9228 = Doverphos® S-9228 = 3,9-Bis(2,4-di-tert-butylphenoxy)-2,4,8,10-tetraoxa-3,9-di-phosphaspiro[5.5]undecan (CAS = 154862-43-8)
- 3,9-Bis(2,6-di-tert-butyl-4-methylphenoxy)-2,4,8,10-tetraoxa-3,9-diphosphaspiro(5.5)undecan (CAS 80693-00-1) = ADK Stab PEP-3
- Irgafos® 126 = Bis-(2,4-di-tert-butylphenyl)-pentaerythrol-diphosphit (CAS 26741-53-7)
- Weston® 618 = Doverphos® S 680 = Dioctadecyl-pentaerythritol-diphosphit (CAS 3806-34-6)
- ADK Stab PEP 36 (CAS 80693-00-1)
- Bis(2,4-di-tert.-butyl-phenyl)-pentaerythroldiphosphit; 3,9-Bis-(2,4-bis-(1,1-dimethylethyl)-phenoxy)-2,4,8,10-tetraoxa-3,9-diphosphaspiro-(5,5)-undekan = ADK Stab PEP 24 = Doverphos® S 9432 = Weston® 626.

Bevorzugte Phosphonite sind beschrieben in WO 2008/116894, dort besonders von Seite 11, Zeile 8 bis Seite 14, Zeile 8, was hiermit per Bezugnahme Bestandteil der vorliegenden Offenbarung sei.

Bevorzugte Phosphonate sind beschrieben in WO 2008/116895, dort besonders von Seite 10, Zeile 38 bis Seite 12, Zeile 41, was hiermit per Bezugnahme Bestandteil der vorliegenden Offenbarung sei.

Bevorzugte Thioether sind beschrieben in WO 2008/116893, dort besonders von Seite 11, Zeile 1 bis Seite 15, Zeile 37, was hiermit per Bezugnahme Bestandteil der vorliegenden Offenbarung sei.

Bei den sauren Stabilisatoren handelt es sich um Bronsted-Säuren, wie sie beschrieben sind in WO 2008/116894, dort besonders von Seite 17, Zeile 34 bis Seite 18, Zeile 23, was hiermit per Bezugnahme Bestandteil der vorliegenden Offenbarung sei.

Trockenmittel oder Entwässerungsmittel sind Verbindungen, die bevorzugt mit Wasser reagieren können. Geeignete Trockenmittel sind beispielsweise para-Toluolsufonylisocyanat (z.B. Zusatzmittel Tl der Firma Borchers), Orthoester (z.B. Zusatzmittel OF der Firma Borchers) oder Oxazolidine, z.B. die Incozol-Typen der Firma ICL (Industrial Copolymers), oder Basonat® SCI der Firma BASF. Bevorzugt ist Toluolsufonylisocyanat.
Die Anwesenheit von Trockenmittel kann insbesondere in einer Polyisocyanat-Komponente bzw. einer Imidazoliumkatalysatoren enthaltenden Komponente von Vorteil sein.

Geeignete UV-Absorber umfassen Oxanilide, Triazine und Benzotriazol (letztere erhältlich z.B. als Tinuvin® -Marken der BASF SE) und Benzophenone (z.B. Chimassorb® 81 der BASF SE). Bevorzugt sind z.B. 95 % Benzolpropansäure, 3-(2H-Benzotriazol-2-yl)-5-(1,1-dimethylethyl)-4-hydroxy-, C7-9-verzweigte und lineare Alkylester; 5 % 1-Methoxy-2-propylacetat (z.B. Tinuvin® 384) und α-[3-[3-(2H-Benzotriazol-2-yl)-5-(1,1,-dimethylethyl)-4-hydroxyphenyl]-1-oxopropyl]-ω-hydroxypoly(oxo-1,2-ethanediyl) (z.B. Tinuvin® 1130), jeweils Produkte z.B. der BASF SE. DL-Alpha-Tocopherol, Tocopherol, Zimtsäurederivate und Cyanoacrylate können ebenfalls zu diesem Zweck eingesetzt werden.

Diese können allein oder zusammen mit geeigneten Radikalfängern, beispielsweise sterisch gehinderten Aminen (oft auch als HALS -oder HAS-Verbindungen bezeichnet; Hindered Amine (Light) Stabilizer) wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Diese sind z.B. erhältlich als Tinuvin®- und Chimassorb®-Marken der BASF SE. Bevorzugt im gemeinsamen Einsatz mit Lewis-Säuren sind jedoch solche gehinderten Amine, die N-alkyliert sind, beispielsweise Bis (1,2,2,6,6-pentamethyl-4-piperidinyl)-[[3,5-bis(1,1-dimethylethyl)-4-hydroxyphenyl]-methyl]butylmalonat (z.B. Tinuvin® 144 der BASF SE); eine Mischung aus Bis(1,2,2,6,6-Pentamethyl-4-Piperidinyl)sebacat und Methyl(1,2,2,6,6-Pentamethyl-4-Piperidinyl)sebacat (z.B. Tinuvin® 292 der BASF SE); oder die N-(O-alkyliert) sind, wie z.B. Dekandisäure,bis(2,2,6,6-tetramethyl-1-(octyloxy)-4-piperidinyl)ester, Reaktionsprodukte mit 1,1-Dimethylethylhydroper-oxyd und Oktan (z.B. Tinuvin® 123 der BASF SE).UV-Stabilisatoren werden üblicherweise in Mengen von 0,1 bis 5,0 Gew.-%, bezogen auf die in der Zubereitung enthaltenen festen Komponenten, eingesetzt.

Als Verdicker kommen neben radikalisch (ko)polymerisierten (Ko)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.
Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden, beispielsweise wie in Schritt a) beschrieben. Beispielsweise können alle Pigmentkomponenten eines standardisierten Mischlacksystems zugrunde liegen.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im Folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Bevorzugte Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Die erfindungsgemäßen Zusammensetzungen der 2K Beschichtungsmassen sind beispielsweise wie folgt zusammengesetzt:
(A) 5 bis 60 Gew%, bevorzugt 10 bis 50 Gew%, besonders bevorzugt 10-30 Gew%,
(B) 10 bis 80 Gew%, bevorzugt 20 bis 60 Gew%,
(C) 10 bis 20000 Gew.ppm, bevorzugt 50 bis 10000, besonders bevorzugt 300 bis 4000,
(D) 0 bis 80, bevorzugt 0-70 %, besonders bevorzugt 5 bis 60 Gew%,
(E) 0-10000 Gew.ppm, bevorzugt 10 bis 5000 Gew.ppm, bevorzugt 20 bis 1000 Gew.ppm
(F) 0-5 % Komponenten und/oder Additive.
mit der Maßgabe, dass die Summe dieser Komponenten, jedoch ohne die der Füllstoffe, Farbmittel und Pigmente mitzuzählen, immer 100 Gew% beträgt.

In den Beschichtungsmassen werden Polyisocyanatzusammensetzung (A) und Bindemittel (B) in einem Molverhältnis von Isocyanatgruppen zu gegenüber Isocyanat reaktiven Gruppen von bevorzugt 0,5:1 bis 2:1, insbesondere 0,8:1 bis 1,2:1 und speziell 0,9:1 bis 1,1:1 miteinander vermischt, wobei optional noch weitere anwendungstypische Bestandteile eingemischt werden können, und auf das Substrat aufgetragen.

Dabei kann optional eine Vormischung, optional Lagerung einer Polyisocyanat bzw. einer Polyol-Komponente erfolgen, z.B.
- (A) mindestens ein Polyisocyanat, erhältlich durch Umsetzung mindestens eines monomeren Isocyanats,
- (C) mindestens ein Imidazoliumsalz gemäß einem der Ansprüche 1 oder 5 bis 8,
- (D) optional mindestens ein Lösungsmittel,
- (E) optional mindestens einen anderen Urethanisierungskatalysator als (C), sowie,
- (F) optional andere anwendungstypische Komponenten und/oder Additive.

Diese Vormischung wird dann kurz vor dem Aufbringen auf das Substrat mit der Polyolkomponente (B), sowie optional einer oder mehreren der Komponenten (D) bis (F) vermischt.

Oder alternativ und bevorzugt:
Es wird eine Vormischung hergestellt, enthaltend die Komponenten
- (B) mindestens eine Verbindung, die mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
- (C) mindestens ein Imidazoliumsalz gemäß einem der Ansprüche 1 oder 5 bis 8,
- (D) optional mindestens ein Lösungsmittel,
- (E) optional mindestens einen anderen Urethanisierungskatalysator als (C), sowie,
- (F) optional andere anwendungstypische Komponenten und/oder Additive.
Diese Vormischung wird dann kurz vor dem Aufbringen auf das Substrat mit der Polyisocyanat-komponente (A), sowie optional einer oder mehreren der Komponenten (D) bis (F) vermischt und bildet so die Beschichtungsmasse.
Das Einmischen in die Polyolkomponente ist bevorzugt, da sich dabei weniger Farbe entwickelt, als bei der Eimischung in die Polyisocyanat-Komponente.

Unter "kurz vor dem Aufbringen" wird dabei verstanden, dass Vormischung und fehlende Komponente in einem Zeitraum vor dem Aufbringen auf das Substrat miteinander vermischt werden, innerhalb dessen eine problemlose Verarbeitbarkeit gewährleistet ist, d.h. die Beschichtungsmasse nach wie vor fließfähig und applizierbar ist, das Lackbild und die Lackeigenschaften nicht relevant beeinträchtigt werden (Verarbeitungszeit s. ISO 9514:2005). Naturgemäß beträgt der Zeitraum weniger als die Gelzeit (siehe Beispiele). Als ein Maß für die Verarbeitungszeit kann beispielsweise die Zeit genommen werden, in der sich die Auslaufzeit der Mischung verdoppelt, beispielsweise von 20 auf 40 Sekunden im DIN 4 Becher (DIN 53211). Beispielsweise werden bei Handapplikation häufig bis zu 3 Stunden Verarbeitungszeit gefordert. Bei rein industriellen Prozessen können im Extremfall die Komponenten vermischt und dann direkt gespritzt werden. Bei Anlagenstillstand muss gegebenenfalls ausreichend Zeit bestehen, dass die Verarbeitung, das Lackbild und die Lackeigenschaften durch die Wartezeit nicht beeinträchtigt werden.

Anschließend wird bei Umgebungstemperatur bis 150 °C das Lackgemisch ausgehärtet.

Bevorzugt wird das Lackgemisch bei 20 bis 110 °C, bevorzugt 20-80 °C, besonders bevorzugt von 20 bis 60 °C ausgehärtet, z.B. für refinish-Anwendungen oder große Objekte, die sich schlecht in einen Ofen stellen lassen. Eine schnelle Härtung bei niedrigen Temperaturen ist wichtig, weil dann die Lackoberfläche in kürzerer Zeit staubfrei trocknet und damit weniger Lackfehler durch Schmutzaufnahme (z.B. Staub, Insekten) aufweist. Außerdem wird die Lagerzeit bis zu einer Weiterverarbeitung verkürzt. Die Bauteile können früher angefasst oder gestapelt werden. Alternativ kann bei niedrigeren Temperaturen gehärtet und so Energie gespart werden.

Unter "Härtung" wird im Rahmen der vorliegenden Erfindung das Erzeugen einer klebfreien Beschichtung auf einem Substrat verstanden, indem man die auf das Substrat aufgetragene Beschichtungsmasse zumindest solange auf die oben angegebene Temperatur erwärmt, bis mindestens die gewünschte Strukturverfestigung eingetreten ist.

Unter einer Beschichtungsmasse wird im Rahmen der vorliegenden Schrift eine Mischung zumindest der Komponenten (A) und (B) verstanden, die zum Beschichten mindestens eines Substrats zum Zwecke einer Ausbildung eines Films und, nach Härtung, einer klebfreien Beschichtung vorgesehen ist.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die optional enthaltenen flüchtigen Bestandteile der Beschichtungsmasse, optional unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Koextrudieren erfolgen.

Die Dicke einer solchen zu härtenden Schicht kann von 0,1 µm bis mehrere mm betragen (z.B. (Struktur)klebstoffe, Gießböden, Grundierungen, Spachtel). Bevorzugt sind 5 bis 200 µm, besonders bevorzugt von 5 bis 60 µm, insbesondere bevorzugt 20-50 µm (bezogen auf die Beschichtung im Zustand in der das Lösungsmittel aus dem System entfernt ist).

Weiterhin sind auch Substrate, beschichtet mit einer erfindungsgemäßen Mehrschichtlackierung Gegenstand der vorliegenden Erfindung.

Besonders geeignet sind solche Polyurethanlacke für Anwendungen, in denen eine besonders hohe Applikationssicherheit, Außenwitterungsbeständigkeit, Optik, Lösemittel-, Chemikalien- und/oder Wasserfestigkeit gefordert werden.

Die erhaltenen zweikomponentigen Beschichtungsmassen und Lackformulierungen eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können.

Derartige Beschichtungsmassen eignen sich als oder in Innen- oder Außenbeschichtungen, also solche Anwendungen, die dem Tageslicht ausgesetzt sind, bevorzugt von Gebäudeteilen, Beschichtungen auf (Groß-)Fahrzeugen und Flugzeugen und industriellen Anwendungen, Nutzfahrzeuge im landwirtschaftlichen und Baubereich, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, wie bei Parkdecks oder in Krankenhäusern in Automobillacken als OEM und refinish-Anwendung.

Bevorzugt werden derartige Beschichtungsmassen bei Temperaturen zwischen Umgebungstemperatur bis 80 °C, bevorzugt bis 60 °C, besonders bevorzugt bis 40 °C eingesetzt. Bevorzugt handelt es sich dabei um solche Gegenstände, die nicht bei hohen Temperaturen gehärtet werden können, wie große Maschinen, Flugzeuge, Großraumfahrzeuge und refinish-Anwendungen, oder OEM bei Plastik- und Anbauteilen kleiner 110 °C.

In einer bevorzugten Variante ist die Beschichtung unter Katalyse eines Imidazoliumcarboxylats mit einem aromatischen Carboxylat, bevorzugt Benzoat, nach 10-30 Minuten Ablüften bei Raumtemperatur, Härtung für 15 bis 25 Minuten bei 60 °C und anschließende Lagerung für 2 bis 4 Stunden bei Raumtemperatur nach überpolierbar.

Denkbar ist auch die Anwendung der Imidazoliumcarboxylate mit aromatischen Carboxylaten in 100%-Systemen wie z.B. Pulverlacken, Klebstoffen, Gießböden, Grundierungen oder Spachteln.

Insbesondere werden die erfindungsgemäßen Beschichtungsmassen entsprechend der Terminologie der Anwendung als Klar-, Basis- und Decklacke, Primer, Grundierung und Füller, Mittelschicht, Überzug, Verschleißschicht, Film, Masse usw. bezeichnet und eingesetzt.

Ein weiterer Gegenstand der vorliegenden Erfindung ist die Verwendung von Imidazolium-Verbindungen gemäß Formel (I) als Katalysatoren für die Härtung von Gemischen enthaltend mindestens ein Polyisocyanat und mindestens eine Verbindung, die gegenüber Isocyanat reaktive Gruppen aufweist.

### Beispiele

### Testmethoden:

Gelierzeit: Zeit bei 23°C, in der eine Mischung einer Polyol- und Polyisocyanatkomponente in einem Reagenzglas bei 23 °C von ca. ∼1,8 cm Innendurchmesser und ∼11 cm Höhe fest wird. Sobald die Mischung eine feste Struktur durch chemische Reaktion aufgebaut hat, hebt ein oszillierend eintauchender Draht das Reagenzglas an und schaltet die Zeitmessung ab. Dies ist eine einfache maschinelle Bestimmung.

Verarbeitungszeit: Zeit bis zur Viskositätsverdopplung einer Mischung aus Polyol- und Polyisocyanatkomponente.

Schichtdicken aller Lacke betrugen 35-45 Mikrometer (bezogen auf den trockenen Lackfilm).

Die Prüfung der Pendelhärte erfolgte nach König entsprechend DIN 53 157, häufig bei Härtung für 30 Minuten bei der angegebenen Temperatur und Lagerung für 24 Stunden bei "Raumtemperatur", d.h. hier bei 23 +/- 2 °C, 50 +/- 5 % Luftfeuchte ausgehärtet (Normklima 23/50). Bei Raumtemperaturlagerung über 7 Tage erfolgt anschließend eine Nachhärtung über 15 h bei 60 °C. Dies soll eine Härtung nach sehr langer Lagerung bei RT simulieren.

### Rohstoffe:

Basonat® HI 100: 1,6-Hexamethylendiisocyanat-basiertes oligomeres Isocyanurat der BASF SE, NCO-Gehalt 22,0%, Viskosität ca. 2800 mPa*s.
Basonat® LR 9046: 1,6-Hexamethylendiisocyanat-basiertes oligomeres Isocyanurat der BASF SE, NCO-Gehalt 23,0%, Viskosität ca. 1200 mPa*s. Dieses Isocyanurat ist aufgrund der niedrigen Viskosität als beim Standard Basonat® HI 100 eher für High Solid-Anwendungen mit niedrigem Lösungsmittelgehalt geeignet.
Joncryl® 507: Acrylat-basiertes Polyol der BASF SE mit OH-Zahl 140 mg KOH/g (80% in Butylacetat). Dieses Polyol ist gut für High Solid-Anwendungen mit niedrigem Lösungsmittelgehalt geeignet.
Joncryl® S028: Acrylat-basiertes Polyol der BASF SE mit OH-Zahl 140 mg KOH/g (72% in Butylacetat)
Joncryl® 902: Acrylat-basiertes Polyol der BASF SE mit OH-Zahl 112 mg KOH/g (75% in Butylacetat)
DBTL: Dibutylzinndilaurat der Firma Merck
Borchi® Kat 24: Bismut-tris-ethylhexanoat der OMG Borchers GmbH (nicht erfindungsgemäß)
TEDA: Triethylendiamin, DABCO, 1,4-Diazabicyclo[2.2.2]octan von Sigma Aldrich
EMIMBz: 1-Ethyl-3-methyl-imidazolium-benzoat. Basionics KAT 1 der BASF SE (erfindungsgemäß)
EMIMAc: 1-Ethyl-3-methyl-imidazolium-acetat. Basionics BC01 der BASF SE (nicht erfindungsgemäß)
EEIMAc: 1-Ethyl-3-ethyl-imidazolium-acetat. Basionics BC03 der BASF SE (nicht erfindungsgemäß)
EEIMOct: 1-Ethyl-3-ethyl-imidazolium-octanoat der BASF SE (nicht erfindungsgemäß)
EMIMEtHex: 1-Ethyl-3-methyl-imidazolium-ethylhexanoat der BASF SE(nicht erfindungsgemäß) EMIMPiv: 1-Ethyl-3-methyl-imidazolium-pivalat der BASF SE (nicht erfindungsgemäß)
PrPrlMAc: 1-iso-Propyl-3-iso-propyl-imidazolium-acetat der BASF SE (nicht erfindungsgemäß). Das Produkt ist fest und musste in Aceton statt in Butylacetat gelöst eingesetzt werden. Im Lack haben sich Feststoffpartikel gebildet.
PrPrlMOct: 1-iso-Propyl-3-iso-propyl-imidazolium-octanoat der BASF SE (nicht erfindungsgemäß).
sBusBulMAc: 1-sec-Butyl-3-sec-butyl-imidazolium-acetat der BASF SE (nicht erfindungsgemäß).
tButBulMAc: 1-tert-Butyl-3-tert-butyl-imidazolium-acetat der BASF SE (nicht erfindungsgemäß).
Me5lMAc: 1,2,3,4,5-Pentamethyl-imidazolium-acetat der BASF SE (nicht erfindungsgemäß).
EMMIMAc: 1-Ethyl-2,3-dimethyl-imidazolium-acetat der BASF SE (nicht erfindungsgemäß).
MMMIMAc: 1,2,3-Trimethyl-imidazolium-acetat der BASF SE (nicht erfindungsgemäß).
Verfahrensvorschrift 1: Joncryl® 507 wurde mit Basonat® HI 100 in stöchiometrischem Verhältnis und mit Katalysator gemischt und mit Butylacetat auf eine Applikationsviskosität von 20 Sekunden Auslaufzeit im DIN4-Becher eingestellt. Mit solchen Mischungen werden die Versuche durchgeführt.

Um die Vergleichbarkeit von Versuchen mit unterschiedlich reaktiven Katalysatoren wird wie folgt vorgegangen:
Die Mischung der Polyol- und Isocyanat-Komponente mit verschiedenen Katalysatoren wird auf die gleiche Gelierzeit eingestellt. Die Katalysatormengen sind dabei unterschiedlich, aber das Verarbeitungsfenster für den Anwender ist vergleichbar. Eine Variante ist es, eine vergleichbare Verarbeitungszeit (Viskositätsverdopplung s.o.) einzustellen. Diese ist in der Größenordnung halb so groß wie die Gelierzeit. Mit der praxisgerechten Verarbeitung lässt sich die Härteentwicklung gut beurteilen.

### Beispielserie 1: Aggregatzustand, Farbe, Löslichkeit

EMIMBz hat gegenüber vielen nicht erfindungsgemäßen Imidazoliumcarboxylaten mit aliphatischen Carboxylaten signifikante Vorteile, da es flüssig und damit besser einarbeitbar ist. Es ist in Lösungsmitteln, Polyolen und Polyisocyanaten besser löslich als viele seiner aliphatischen Analoga.

**Tabelle 1: Aggregatzustand, Löslichkeit in Polyol (Joncryl® 507); Polyisocyanat (Basonat® HI 100); Lösungsmittel Butylacetat (bevorzugt), Aceton (OK = löslich; NOK = nicht löslich)**

| Produkt | | Aggregatzustand | Joncryl® 507 | Basonat® HI 100 | 10% in Aceton |
|---|---|---|---|---|---|
| EMIMBz | Bsp. | flüssig | >10 % | gelb, trüb | OK |
| EMIMAc | Vgl. | flüssig | | <2%, rote Schlieren | NOK |
| EEIMAc | Vgl. | flüssig | 1 % Partikel | <2%, rote Schlieren | OK |
| EEIMOct | Vgl. | flüssig | >1% | <2%, rote Schlieren | OK |
| EMIMEtHex | Vgl. | flüssig | | gelb, trüb | |
| EMIMPiv | Vgl. | fest | | | |
| PrPrlMAc | Vgl. | fest | >5 % | <5%, orange-brauner Feststoff | NOK |
| PrPrIMOct | Vgl. | fest | >1% | <1% weißer Feststoff | OK |
| sBus-BuIMAc | Vgl. | fest | <1% in 1h | <2%, weißer Feststoff | OK |
| tBut-BuIMAc | Vgl. | fest | | | OK |
| Me5IMAc | Vgl. | fest | | | NOK |
| EMMIMAc | Vgl. | fest | <5% | <5% weißer Feststoff | |
| MMMIMAc | Vgl. | fest | <5% | <5% weißer Feststoff | NOK |

Die Löslichkeiten sind bei Raumtemperatur (RT, 23 °C) angegeben. Die Werte sind nur in bestimmten Grenzen bestimmt worden, und können ggf. höher liegen als angegeben. Relevant sind daher die Vergleichsbeispiele mit kleiner als einem bestimmten Prozentsatz. PrPrIMAc und Me51MAc sind nicht in Butylacetat löslich. Diese führen bei der Applikation häufig zu Feststoffrückständen im Lack.
tButBulMAc hat im Gegensatz zu den anderen Produkten eine tiefbraune Eigenfarbe, die es wenig geeignet für eine Klarlackanwendung macht.

Beispielserie 2: Die Farben der Gelzeitproben wurden bestimmt. Durch die hohe Schichtdicke stellt dies eine einfache Methode der Bewertung der Farbentwicklung in einer Formmasse bzw. analog im Lack bei Raumtemperatur dar:

| Katalysator | | Joncryl® 507 | Joncryl® 507 | Joncryl® S028 | Joncryl® S028 |
|---|---|---|---|---|---|
| | | Direkt nach Vermischung | 14 Tage Lagerung bei Raumtemperatur | direkt | 14 Tage |
| EMIMBz | Bsp. | farblos | farblos | farblos | farblos |
| EEIMAc | Vgl. | gelblich | gelblich | farblos | gelb |
| EEIMOct | Vgl. | gelb | gelb | farblos | gelb |
| EMIMEtHex | Vgl. | farblos | farblos | gelblich | gelblich |
| EMIMPiv | Vgl. | farblos | farblos | farblos | farblos |
| PrPrIMAc | Vgl. | gelb | gelb | farblos | gelblich |
| PrPrIMOct | Vgl. | | | gelblich | gelblich |
| Me51MAc | Vgl. | gelblich | gelblich | gelblich | gelblich |

Neben dem EMIM-Benzoat sind nur die Muster mit den metallorganischen Katalysatoren, TEDA sowie EMIM-Pivalat farblos. Letzteres ist fest und damit schwerer einzuarbeiten. Die anderen Imidazolium-carboxylate mit aliphatischen Carboxylaten sind mit dem einen oder anderen Polyol gelblich bis gelb. Die metallorganischen Katalysatoren weisen wie in den anderen Versuchen gezeigt Nachteile im Härtungsverhalten auf (langsamere Härteentwicklung bei gleicher Gelierzeit).

Beispielserie 3: Bei der Pendelhärteentwicklung bei RT schneidet das EMIM-Benzoat als Katalysator der Reaktion von Basonat® HI 100 mit Joncryl® 507 über die gesamte Lagerzeit der Lacke bei RT besser ab als die Imidazoliumcarboxylate mit aliphatischen Carboxylaten und TEDA. Mit DBTL wird nach 7 Tagen RT + 15 h 60 °C eine höhere Endhärte erreicht als mit EMIM-Benzoat, aber es dauert 7 Tage bei RT, bis die Härte an die mit EMIM-Benzoat-Katalyse herankommt. Bei der Lackanwendung ist die Kombination schneller Anfangs- und hoher Endhärte von Vorteil.

**Tabelle 3: Vergleich der Pendelhärte in Schlägen mit 7,6 g Basonat® HI 100, 20,0 g Joncryl® 507, 10,3 g Butylacetat und Katalysator in der angegebenen Menge bezogen auf den Gesamtansatz bei vergleichbarer Gelierzeit von ca. 3 - 4:30 Stunden. Die Pendelhärte wurde nach 1; 4 und 7 Tagen RT sowie nach 7 Tagen RT und 15 h 60 °C bestimmt.**

| | | Katalysatormenge | 1 Tag RT | 4 Tage RT | 7 Tage RT | 7 Tage RT +15 h 60°C | Gelzeit [h:min] |
|---|---|---|---|---|---|---|---|
| EMIMBz | Bsp. | 0,29 % | 66 | 88 | 88 | 94 | 4:30 |
| DBTL | Vgl. | 0,063 % | 4 | 59 | 87 | 100 | 4:24 |
| TEDA | Vgl. | 0,55 % | 51 | 56 | 56 | 93 | 3:22 |
| EEIMAc | Vgl. | 0,18 % | 45 | 46 | 44 | 61 | 3:21 |
| EEIMOct | Vgl. | 0,21 % | 45 | 52 | 46 | 66 | 3:08 |
| EMIMEtHex | Vgl. | 0,21 % | 58 | 73 | 74 | 90 | 3:24 |
| EMIMPiv | Vgl. | 0,16 % | 59 | 70 | 69 | 86 | 3:32 |

EMIM-Benzoat hat die schnellste Härteentwicklung bei Raumtemperatur, insbesondere die Werte bei 1 Tag und 4 Tagen bei Raumtemperatur. Die Endhärte (simuliert durch die Lagerung für 7 Tage bei Raumtemperatur und anschließende Härtung für 15 h bei 60 °C), ist für EMIMBz, DBTL und TEDA am besten. Gewünscht ist eine Kombination von schneller Härtung und hoher Endhärte.

Beispielserie 4: Bei 80°C Härtungstemperatur kommt es bei den Imidazoliumcarboxylaten mit aliphatischen Carboxylaten als Katalysator bei der Reaktion von Basonat® HI 100 mit Joncryl® 507 zu einem Abfall der Härte gegenüber den Werten bei 60 °C-Härtung. Ausgenommen ist das Pentamethylimidazoliumacetat, welches schon bei 60 °C Härtung eine niedrige Pendelhärte aufwies (schlechte Löslichkeit, Partikel im Lack).

**Tabelle 4: Vergleich der Pendelhärten bei Härtung bei verschiedenen Lagertemperaturen der beschichteten Bleche bei vergleichbarer Gelierzeit von ca. 3 - 4:30 Stunden. Muster hergestellt mit 7,6 g Basonat® HI 100, 20,0 g Joncryl® 507, Katalysator in der angegebenen Menge bezogen auf den Gesamtansatz, und insgesamt 10,3 g Butylacetat.**

| | | Katalysatormenge | 1 d RT | 30 min 60°C + 1 d RT | 30 min 80°C + 1 d RT | Bemerkung | Gelzeit [h:min] |
|---|---|---|---|---|---|---|---|
| EMIMBz | Bsp. | 0,29 % | 66 | 85 | 84 | Beste | 4:30 |
| DBTL | Vgl. | 0,063 % | 4 | 13 | 49 | niedrige Werte | 4:24 |
| TEDA | Vgl. | 0,55 % | 51 | 89 | 85 | Abfall bei 80 °C | 3:22 |
| EEIMAc | Vgl. | 0,18 % | 45 | 81 | 48 | Abfall bei 80 °C | 3:21 |
| EEIMOct | Vgl. | 0,21 % | 45 | 86 | 51 | Abfall bei 80 °C | 3:08 |
| EMIMEtHex | Vgl. | 0,21 % | 58 | 66 | 32 | Abfall bei 80 °C | 3:24 |
| EMIMPiv | Vgl. | 0,16 % | 59 | 54 | 20 | Abfall bei 80 °C | 3:32 |

Es wurde gezeigt, dass nur für EMIM-Benzoat über die 60 bis 80 °C ein Anstieg der Pendelhärte mit der Härtungstemperatur stattfand, während dies für die nicht erfinderischen Imidazoliumsalze mit aliphatischen Carboxylaten nicht galt.
Bei PrPrIMAc und Me5IMAc gab es Löslichkeitsprobleme.

Bereits in den Tabellen 3 und 4 der Seite 40 der WO 2011/061314 war erkennbar, dass bei der Härtung eines Polyisocyanats mit dem Polyacrylatpolyol Joncryl® 507 die Pendelhärten bei Härtung bei 30 min 60 °C + 24 h Raumtemperatur gegenüber 30 min 40 °C + 24 h Raumtemperatur in 7 von 10 Beispielen schlechter waren. In den Beispielen der Tabelle 4a und 4b wurde bei 80 °C gegenüber 60 °C für alle Katalysatoren mit aliphatischen Carboxylaten ein Abfall gefunden, darunter den dreien bei denen in der WO 2011/061314 noch bei 60 °C höhere Pendelhärten gefunden wurden als bei 40 °C
Normalerweise erfolgt bei einer höheren Temperatur der Härtung von Polyisocyanat mit Polyol auch eine schnellere Pendelhärteentwicklung. Anwender müssen sich dabei auf dieses erwartete Härtungs- und Trocknungsverhalten verlassen können.

Die in der WO 2007/090755 als gut beschriebenen 1,3-Diisopropylimidazoliumacetat und Pentamethylimidazoliumacetat sind schlecht löslich, so dass sie bevorzugt nur in Aceton als Lösungsmittel gelöst und mit Dispermat, aber nicht per Hand eingerührt werden können. Aceton ist in Lackanwendungen unerwünscht, da es leicht entzündlich ist und einen Flammpunkt von unter -20 °C hat.

**Tabelle 5: 7,0 g Basonat® HI 100, 20 g Joncryl® S028, 12,5 g Butylacetat und die in der Tabelle angegebenen Katalysatormengen wurden miteinander gemischt, als Lack appliziert und unter den angegebenen Bedingungen gehärtet. Die Gelzeit betrug je ca. 3 Stunden.**

| | | Katalysatormenge | 1 d RT | 30 min 60°C + 1 d RT | 30 min 80°C + 1 d RT | Gelzeit [h:min] |
|---|---|---|---|---|---|---|
| EMIMBz | Bsp. | 0,30 % | 93 | 126 | 133 | 03:12 |
| DBTL | Vgl. | 0,012 % | 45 | 62 | 120 | 02:51 |
| TEDA | Vgl. | 0,58 % | 84 | 124 | 136 | 03:28 |
| EEIMAc | Vgl. | 0,175 % | 81 | 125 | 127 | 03:08 |
| EEIMOc | Vgl. | 0,25 % | 76 | 125 | 127 | 03:00 |
| PrPrIMOc | Vgl. | 0,22 % | 50 | 121 | 128 | 02:43 |
| EMIMEtHex | Vgl. | 0,21 % | 80 | 122 | 125 | 03:17 |
| EMIMPiv | Vgl. | 0,18 % | 87 | 116 | 128 | 03:19 |

| | | | | | | |
|---|---|---|---|---|---|---|
| EMIM-Benzoat zeigt eine schnellere Härtung bei vergleichbarer Gelierzeit. | | | | | | |

**Tabelle 6: 7,1 g Basonat® HI 100, 20,0 g Joncryl® S028, 12,0 g Butylacetat und die in der Tabelle angegebenen Katalysatormengen wurden miteinander gemischt, als Lack appliziert und unter den angegebenen Bedingungen gehärtet. Die Gelzeit betrug je ca. 3 Stunden.**

| Pendelhärte | Katalysatormenge | 23 °C | 60 °C | 80 °C | 110 °C | Gelzeit |
|---|---|---|---|---|---|---|
| EMIMBz | 0,30% | 103 | 116 | 124 | 139 | 3:13 |
| EMIM-Ac | 0,17% | 95 | 94 | 109 | 136 | 3:09 |

| | | | | | | |
|---|---|---|---|---|---|---|
| EMIM-Benzoat zeigt bei allen Temperaturen eine bessere Härtung bei vergleichbarer Gelierzeit. | | | | | | |

**Tabelle 7: Härtung von Basonat® LR 9046 (7,3 g) mit Joncryl® 507 (20,0 g) mit Katalysatoren und in Summe 11,0 g Butylacetat. In der folgenden Tabelle sind die Pendelhärten bei verschiedenen Temperaturen angegeben (24 h 23°C; je 30 min 60 / 80 °C + 24 h 23°C) und die Gelzeit.**

| Katalysator | Kat.-Menge | | Pendel härte | | | Gelzeit |
|---|---|---|---|---|---|---|
| | | | 23 °C | 60 °C | 80 °C | h:min |
| EMIMBz | 0,29 % | 0,11 g | 88 | 98 | 100 | 3:44 |
| EMIMAc | 0,22 % | 0,08 g | 72 | 83 | 41 | 3:14 |

EMIM-Benzoat zeigt bei vergleichbarer Gelierzeit bei allen Temperaturen eine bessere Härtung. Zudem gibt es wieder mit dem EMIMAc einen Abfall der Härte, wenn die Temperatur von 60 auf 80 °C erhöht wird. Dahingegen zeigt EMIMBz das gewünschte Härteverhalten.

**Tabelle 8: Härtung von Basonat® LR 9046 (5,5 g) mit Joncryl® 902 (20,0 g), 11,0 g Butylacetat und mit Katalysatoren der in der Tabelle angegebenen Mengen. Es sind zudem die Pendelhärten in Schlägen bei verschiedenen Temperaturen angegeben (24 h 23°C; je 30 min 60 / 80 °C + 24 h 23°C) und die Gelzeit.**

| Katalysator | Kat.-Menge | | Pendelhärte | | | Gelzeit |
|---|---|---|---|---|---|---|
| | | | 23 °C | 60 °C | 80 °C | h:min |
| EMIMBz | 0,29 % | 0,10 g | 72 | 128 | 136 | 3:04 |
| EMIMAc | 0,22 % | 0,08 g | 54 | 122 | 130 | 2:45 |

| | | | | | | |
|---|---|---|---|---|---|---|
| EMIM-Benzoat zeigt bei vergleichbarer Gelierzeit von ca. 03:00 h:min bei allen Temperaturen eine bessere Härtung. | | | | | | |

## Patentansprüche

1. Verfahren zur Beschichtung von Substraten mit Beschichtungsmassen, umfassend
- in einem ersten Schritt Aufbringen auf das Substrat in der gewünschten Stärke mindestens einer Beschichtungsmasse, enthaltend
- (A) mindestens ein Polyisocyanat, erhältlich durch Umsetzung mindestens eines monomeren Isocyanats,
- (B) mindestens ein Bindemittel, das mindestens zwei gegenüber Isocyanat reaktive Gruppen, ein zahlenmittleres Molekulargewicht Mn von mindestens 1000 g/mol und eine OH-Zahl von 40 bis 350 mg KOH/g aufweist,
- (C) mindestens ein Imidazoliumsalz,
- (D) optional mindestens ein Lösungsmittel,
- (E) optional mindestens einen anderen Urethanisierungskatalysator als (C), sowie,
- (F) optional andere anwendungstypische Komponenten und/oder Additive,
wobei das Imidazoliumsalz (C) die Formel I 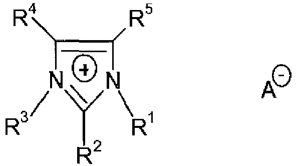 aufweist,
worin R¹ und R³ unabhängig voneinander für einen organischen Rest mit 1 bis 20 C-Atomen stehen,
R² für ein H-Atom oder einen organischen Rest mit bis zu 20 C-Atomen steht,
R⁴ und R⁵ für ein H-Atom stehen und,
wobei es sich bei A⁻ um das Anion der Benzoesäure handelt,
- optional Trocknen der auf das Substrat aufgebrachten Beschichtungsmasse durch zumindest teilweises Entfernen flüchtiger Bestandteile, gefolgt von
- Härten der auf das Substrat aufgebrachten Beschichtungsmasse.

2. Verfahren gemäß Anspruch 1, **dadurch gekennzeichnet, dass** es sich bei dem monomeren Isocyanat für das Polyisocyanat (A) um ein (cyclo)aliphatisches monomeres Isocyanat handelt.

3. Verfahren gemäß Anspruch 1 oder 2, **dadurch gekennzeichnet, dass** das Polyisocyanat (A) ausgewählt ist aus der Gruppe bestehend aus Isocyanuraten, Biureten, Urethanen, Allophanaten, oder Mischungen aus selbigen.

4. Verfahren gemäß einem der vorstehenden Ansprüche, **dadurch gekennzeichnet, dass** das Bindemittel (B) ausgewählt aus der Gruppe bestehend aus Polyacrylatpolyolen, Polyesterpolyolen, Polyurethanpolyolen, Polycarbonatpolyolen und Polyetherpolyolen und deren Mischungen.

5. Verfahren gemäß Anspruch 1, **dadurch gekennzeichnet, dass** das Bindemittel eine Säurezahl von kleiner 100, bevorzugt kleiner 60, besonders bevorzugt kleiner 30, und ganz besonders bevorzugt kleiner 10 mg KOH/g Bindemittel (bezogen auf den Festzustand) hat, wobei die Säuregruppen gegebenenfalls durch eine Base neutralisiert sein können.

6. Verfahren gemäß einem der vorstehenden Ansprüche, **dadurch gekennzeichnet, dass** im Imidazoliumion (C) die Reste R¹ und R³ unabhängig voneinander für eine Methyl-, Ethyl-, n-Propyl- oder n-Butylgruppe stehen.

7. Verfahren gemäß einem der vorstehenden Ansprüche, **dadurch gekennzeichnet, dass** ein weiterer anderer Urethanisierungskatalysator (E) oder ein weiterer basischer Katalysator anwesend ist, bevorzugt ausgewählt aus der Gruppe bestehend aus 1,4-Diazabicyclo[2.2.2]octan, und Lewis-Säuren, insbesondere metallorganischen Verbindungen auf Basis von Bismut, Zink, Zirkonium, Titan, Eisen und/oder Aluminium.

8. Verfahren gemäß einem der vorhergehenden Ansprüche, **dadurch gekennzeichnet, dass** eine Vormischung enthaltend
- (B) mindestens eine Verbindung, die mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
- (C) mindestens ein Imidazoliumsalz gemäß einem der Ansprüche 1 oder 6,
- (D) optional mindestens ein Lösungsmittel,
- (E) optional mindestens einen anderen Urethanisierungskatalysator als (C), sowie,
- (F) optional andere lacktypische Komponenten und/oder Additive,
kurz vor dem Aufbringen auf das Substrat vermischt wird mit
- (A) mindestens einem Polyisocyanat, erhältlich durch Umsetzung mindestens eines monomeren Isocyanats, sowie optional eine oder mehrere der Komponenten (D) bis (F),
und anschließend
- optional Trocknen der auf das Substrat aufgebrachten Beschichtungsmasse durch zumindest teilweises Entfernen flüchtiger Bestandteile, gefolgt von
- Härten der auf das Substrat aufgebrachten Beschichtungsmasse erfolgt.

9. Verfahren gemäß einem der vorstehenden Ansprüche, **dadurch gekennzeichnet, dass** bei einer Temperatur von unter 110 °C, bevorzugt unter 80 °C, besonders bevorzugt unter 60 °C, ganz besonders bevorzugt unter 40 °C gehärtet wird.

10. Verfahren gemäß einem der vorangehenden Ansprüche, **dadurch gekennzeichnet, dass** die Beschichtungsmasse einen Feststoffgehalt von mehr als 58% bei einer Auslaufzeit (DIN 4-Becher) von 20 Sekunden bei 23 °C aufweist.

11. Lack als Mittel zur Beschichtung eines Substrats nach einem Verfahren gemäß einem der vorstehenden Ansprüche, enthaltend
- (A) mindestens ein Polyisocyanat, erhältlich durch Umsetzung mindestens eines monomeren Isocyanats,
- (B) mindestens eine Verbindung, die mindestens zwei gegenüber Isocyanat reak tive Gruppen, eine zahlenmittleres Molekulargewicht Mn von mindestens 1000 g/mol und eine OH-Zahl von 40 bis 350 mg KOH/g aufweist,
- (C) mindestens ein Imidazoliumsalz gemäß einem der Ansprüche 1 oder 6,
- (D) optional mindestens ein Lösungsmittel,
- (E) optional mindestens einen anderen Urethanisierungskatalysator als (C), sowie,
- (F) optional andere lacktypische Komponenten und/oder Additive.

12. Vormischung als Mittel zur Beschichtung eines Substrats nach einem Verfahren gemäß Anspruch 8, enthaltend
- (B) mindestens eine Verbindung, die mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
- (C) mindestens ein Imidazoliumsalz gemäß einem der Ansprüche 1 oder 6,
- (D) optional mindestens ein Lösungsmittel,
- (E) optional mindestens einen anderen Urethanisierungskatalysator als (C), sowie,
- (F) optional andere lacktypische Komponenten und/oder Additive.

13. Verwendung von Imidazoliumionen gemäß Formel (I) wie definiert in Anspruch 1 oder 6 als Katalysatoren für die Härtung von Beschichtungsmassen, enthaltend mindestens ein Polyisocyanat und mindestens ein Bindemittel, wie definiert in Anspruch 1, 4 oder 5.

14. Verwendung nach Anspruch 13, wobei es sich bei den Beschichtungsmassen um Lacke, Klebstoffe, Gießböden, Grundierungen oder Spachtelmassen handelt.

## Claims

1. A method of coating a substrate with coating composition, comprising
- in a first step applying to the substrate in the desired thickness at least one coating composition comprising
- (A) at least one polyisocyanate obtainable by reacting at least one monomeric isocyanate,
- (B) at least one binder which has at least two isocyanate-reactive groups, a number-average molecular weight Mn of at least 1000 g/mol, and an OH number of 40 to 350 mg KOH/g,
- (C) at least one imidazolium salt,
- (D) optionally at least one solvent,
- (E) optionally at least one urethanization catalyst other than (C), and,
- (F) optionally other, typical application components and/or additives,
said imidazolium salt (C) having the formula I 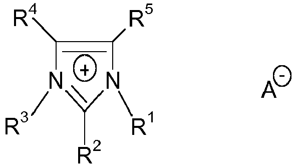
in which R¹ and R³ independently of one another are an organic radical having 1 to 20 C atoms,
R² is an H atom or an organic radical having up to 20 C atoms,
R⁴ and R⁵ are an H atom
and A⁻ is the anion of benzoic acid,
- optionally drying the coating composition applied to the substrate, by at least partly removing volatile constituents, followed by
- curing the coating composition applied to the substrate.

2. The method according to claim 1, wherein said monomeric isocyanate for the polyisocyanate (A) is an (cyclo)aliphatic monomeric isocyanate.

3. The method according to claim 1 or 2, wherein said polyisocyanate (A) is selected from the group consisting of isocyanurates, biurets, urethanes, and allophanates, or mixtures of these.

4. The method according to any of the preceding claims, wherein said binder (B) is selected from the group consisting of polyacrylate polyols, polyester polyols, polyurethane polyols, polycarbonate polyols, and polyether polyols, and mixtures thereof.

5. The method according to claim 1, wherein the binder has an acid number of less than 100, preferably less than 60, more preferably less than 30, and very preferably less than 10 mg KOH/g binder (based on the solid state), it being possible for the acid groups optionally to have been neutralized by a base.

6. The method according to any of the preceding claims, wherein the radicals R¹ and R³ in the imidazolium ion (C) are independently of one another a methyl, ethyl, n-propyl or n-butyl group.

7. The method according to any of the preceding claims, wherein a further, different urethanization catalyst (E) or a further basic catalyst is present, preferably selected from the group consisting of 1,4-diazabicyclo[2.2.2]octane, and Lewis acids, more particularly organometallic compounds based on bismuth, zinc, zirconium, titanium, iron and/or aluminum.

8. The method according to any of the preceding claims, wherein a premix comprising
- (B) at least one compound which has at least two isocyanate-reactive groups, a number-average molecular weight Mn of at least 1000 g/mol, and an OH number of 40 to 350 mg KOH/g
- (C) at least one imidazolium salt according to any of claims 1 and 6,
- (D) optionally at least one solvent,
- (E) optionally at least one urethanization catalyst other than (C), and,
- (F) optionally other, typical coatings components and/or additives
is mixed, shortly before application to the substrate, with
- (A) at least one polyisocyanate obtainable by reacting at least one monomeric isocyanate, and also, optionally, one or more of compounds (D) to (F),
and, subsequently,
- optionally drying of the coating composition applied to the substrate, by at least partial removal of volatile constituents, followed by
- curing of the coating composition applied to the substrate takes place.

9. The method according to any of the preceding claims, wherein curing is carried out at a temperature of below 110°C, preferably below 80°C, more preferably below 60°C, very preferably below 40°C.

10. The method according to any of the preceding claims, wherein the coating composition has a solids content of more than 58% with a flow time (DIN 4 cup) of 20 seconds at 23°C.

11. A coating material as material for coating a substrate by a method according to any of the preceding claims, comprising
- (A) at least one polyisocyanate obtainable by reacting at least one monomeric isocyanate
- (B)at least one compound which has at least two isocyanate-reactive groups, a number-average molecular weight Mn of at least 1000 g/mol, and an OH number of 40 to 350 mg KOH/g
- (C)at least one imidazolium salt according to any of claims 1 and 6,
- (D)optionally at least one solvent,
- (E)optionally at least one urethanization catalyst other than (C), and
- (F)optionally other, typical coatings components and/or additives.

12. A premix as material for coating a substrate by a method according to claim 8, comprising
- (B)at least one compound which has at least two isocyanate-reactive groups, a number-average molecular weight Mn of at least 1000 g/mol, and an OH number of 40 to 350 mg KOH/g,
- (C) at least one imidazolium salt according to any of claims 1 and 6,
- (D)optionally at least one solvent,
- (E)optionally at least one urethanization catalyst other than (C), and
- (F)optionally other, typical coatings components and/or additives.

13. The use of an imidazolium ion of formula (I) as defined in claim 1 or 6 as a catalyst for curing coating compositions comprising at least one polyisocyanate and at least one binder as defined in claim 1, 4 or 5.

14. The use according to claim 13, the coating compositions being paints, varnishes, adhesives, poured floors, primers or troweling compositions.

## Revendications

1. Procédé de revêtement de substrats avec des matériaux de revêtement, comprenant :
- lors d'une première étape, l'application sur le substrat en l'épaisseur souhaitée d'au moins un matériau de revêtement, contenant :
- (A) au moins un polyisocyanate, pouvant être obtenu par mise en réaction d'au moins un isocyanate monomère,
- (B) au moins un liant, qui comprend au moins deux groupes réactifs avec les isocyanates, présente un poids moléculaire moyen en nombre Mn d'au moins 1 000 g/mol et un indice OH de 40 à 350 mg KOH/g,
- (C) au moins un sel d'imidazolium,
- (D) éventuellement au moins un solvant,
- (E) éventuellement au moins un autre catalyseur d'uréthanisation que (C), ainsi que
- (F) éventuellement d'autres composants et/ou additifs types pour l'application,
le sel d'imidazolium (C) présentant la formule I 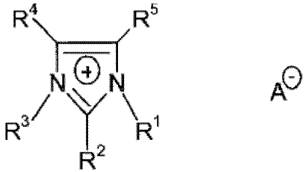
dans laquelle R¹ et R³ représentent indépendamment l'un de l'autre un radical organique de 1 à 20 atomes C,
R² représente un atome H ou un radical organique contenant jusqu'à 20 atomes C,
R⁴ et R⁵ représentent un atome H, et
A⁻ consiste en l'anion de l'acide benzoïque,
- éventuellement le séchage du matériau de revêtement appliqué sur le substrat par élimination au moins partielle des constituants volatils, suivi par
- le durcissement du matériau de revêtement appliqué sur le substrat.

2. Procédé selon la revendication 1, **caractérisé en ce que** l'isocyanate monomère pour le polyisocyanate (A) consiste en un isocyanate monomère (cyclo)aliphatique.

3. Procédé selon la revendication 1 ou 2, **caractérisé en ce que** le polyisocyanate (A) est choisi dans le groupe constitué par les isocyanurates, les biurets, les uréthanes, les allophanates ou les mélanges de ceux-ci.

4. Procédé selon l'une quelconque des revendications précédentes, **caractérisé en ce que** le liant (B) est choisi dans le groupe constitué par les polyacrylate-polyols, les polyester-polyols, les polyuréthane-polyols, les polycarbonate-polyols et les polyéther-polyols et leurs mélanges.

5. Procédé selon la revendication 1, **caractérisé en ce que** le liant présente un indice d'acidité inférieur à 100, de préférence inférieur à 60, de manière particulièrement préférée inférieur à 30 et de manière tout particulièrement préférée inférieur à 10 mg KOH/g de liant (par rapport à l'état solide), les groupes acides pouvant éventuellement être neutralisés par une base.

6. Procédé selon l'une quelconque des revendications précédentes, **caractérisé en ce que**, dans l'ion imidazolium (C), les radicaux R¹ et R³ représentent indépendamment l'un de l'autre un groupe méthyle, éthyle, n-propyle ou n-butyle.

7. Procédé selon l'une quelconque des revendications précédentes, **caractérisé en ce qu'**un autre catalyseur d'uréthanisation (E) ou un autre catalyseur basique est présent, de préférence choisi dans le groupe constitué par le 1,4-diazabicyclo[2.2.2]octane et les acides de Lewis, notamment les composés métallo-organiques à base de bismuth, de zinc, de zirconium, de titane, de fer et/ou d'aluminium.

8. Procédé selon l'une quelconque des revendications précédentes, **caractérisé en ce qu'**un pré-mélange contenant :
- (B) au moins un composé qui comprend au moins deux groupes réactifs avec les isocyanates, présente un poids moléculaire moyen en nombre Mn d'au moins 1 000 g/mol et un indice OH de 40 à 350 mg KOH/g,
- (C) au moins un sel d'imidazolium selon l'une quelconque des revendications 1 ou 6,
- (D) éventuellement au moins un solvant,
- (E) éventuellement au moins un autre catalyseur d'uréthanisation que (C), ainsi que
- (F) éventuellement d'autres composants et/ou additifs types des vernis,
est mélangé peu avant l'application sur le substrat avec
- (A) au moins un polyisocyanate, pouvant être obtenu par mise en réaction d'au moins un isocyanate monomère, ainsi qu'éventuellement un ou plusieurs des composants (D) à (F),
puis
- éventuellement un séchage du matériau de revêtement appliqué sur le substrat par élimination au moins partielle des constituants volatils, suivi par
- un durcissement du matériau de revêtement appliqué sur le substrat ont lieu.

9. Procédé selon l'une quelconque des revendications précédentes, **caractérisé en ce que** le durcissement a lieu à une température inférieure à 110 °C, de préférence inférieure à 80 °C, de manière particulièrement préférée inférieure à 60 °C, de manière tout particulièrement préférée inférieure à 40 °C.

10. Procédé selon l'une quelconque des revendications précédentes, **caractérisé en ce que** le matériau de revêtement présente une teneur en solides supérieure à 58 % à un temps d'écoulement (DIN 4-bécher) de 20 secondes à 23 °C.

11. Vernis en tant qu'agent pour le revêtement d'un substrat par un procédé selon l'une quelconque des revendications précédentes, contenant :
- (A) au moins un polyisocyanate, pouvant être obtenu par mise en réaction d'au moins un isocyanate monomère,
- (B) au moins un composé qui comprend au moins deux groupes réactifs avec les isocyanates, présente un poids moléculaire moyen en nombre Mn d'au moins 1 000 g/mol et un indice OH de 40 à 350 mg KOH/g,
- (C) au moins un sel d'imidazolium selon l'une quelconque des revendications 1 ou 6,
- (D) éventuellement au moins un solvant,
- (E) éventuellement au moins un autre catalyseur d'uréthanisation que (C), ainsi que
- (F) éventuellement d'autres composants et/ou additifs types pour les vernis.

12. Pré-mélange en tant qu'agent pour le revêtement d'un substrat par un procédé selon la revendication 8, contenant :
- (B) au moins un composé qui comprend au moins deux groupes réactifs avec les isocyanates, présente un poids moléculaire moyen en nombre Mn d'au moins 1 000 g/mol et un indice OH de 40 à 350 mg KOH/g,
- (C) au moins un sel d'imidazolium selon l'une quelconque des revendications 1 ou 6,
- (D) éventuellement au moins un solvant,
- (E) éventuellement au moins un autre catalyseur d'uréthanisation que (C), ainsi que
- (F) éventuellement d'autres composants et/ou additifs types des vernis.

13. Utilisation d'ions imidazolium de formule (I) tels que définis dans la revendication 1 ou 6 en tant que catalyseurs pour le durcissement de matériaux de revêtement, contenant au moins un polyisocyanate et au moins un liant, tels que définis dans la revendication 1, 4 ou 5.

14. Utilisation selon la revendication 13, dans laquelle les matériaux de revêtement sont des vernis, des adhésifs, des sols coulés, des couches de fond ou des enduits.
